(19) Europäisches Patentamt
European Patent Office
Office européen des brevets

(11) **EP 4 096 178 B1**

(12) **EUROPEAN PATENT SPECIFICATION**

(45) Date of publication and mention
of the grant of the patent:
**26.06.2024 Bulletin 2024/26**

(21) Application number: **20941556.1**

(22) Date of filing: **02.11.2020**

(51) International Patent Classification (IPC):
*H04L 27/26* (2006.01)     *H04B 1/10* (2006.01)

(52) Cooperative Patent Classification (CPC):
**H04B 3/54; H04B 1/1027; H04B 1/109;
H04L 27/2691**

(86) International application number:
**PCT/CN2020/125835**

(87) International publication number:
**WO 2021/258599 (30.12.2021 Gazette 2021/52)**

(54) **METHOD AND CIRCUIT FOR SUPPRESSING PULSE INTERFERENCE IN CODING AND
DECODING COMMUNICATION**

VERFAHREN UND SCHALTUNG ZUR UNTERDRÜCKUNG VON IMPULSINTERFERENZEN BEI
DER CODIERUNG UND DECODIERUNG VON KOMMUNIKATION

PROCÉDÉ ET CIRCUIT DE SUPPRESSION D'INTERFÉRENCE IMPULSIVE LORS DU CODAGE
ET DU DÉCODAGE DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2020 CN 202010572322**

(43) Date of publication of application:
**30.11.2022 Bulletin 2022/48**

(73) Proprietor: SPL Electronic Technology Co., Ltd
Shenzhen, Guangdong 518000 (CN)

(72) Inventors:
• **PANG, Hao**
Shenzhen, Guangdong 518000 (CN)
• **HUANG, Meiying**
Shenzhen, Guangdong 518000 (CN)

(74) Representative: **2SPL Patentanwälte PartG mbB
Landaubogen 3
81373 München (DE)**

(56) References cited:
**EP-A2- 1 180 851      EP-B1- 0 583 967
CN-A- 105 207 966      CN-A- 105 591 990
CN-A- 109 921 826      CN-A- 111 740 936**

• **ADEBISI BAMIDELE ET AL: "A New Approach to
Peak Threshold Estimation for Impulsive Noise
Reduction Over Power Line Fading Channels",
IEEE SYSTEMS JOURNAL, IEEE, US, vol. 13, no.
2, 1 June 2019 (2019-06-01), pages 1682-1693,
XP011727436, ISSN: 1932-8184, DOI:
10.1109/JSYST.2018.2808230 [retrieved on
2019-05-31]**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**TECHNICAL FIELD**

The present disclosure generally relates to technologies for suppressing pulse interference of power line and wireless communication in a power user electric energy data acquisition system , and more specifically, to a method and circuit for suppressing pulse interference in encoding and decoding communications.

**BACKGROUND ART**

In addition to additive white Gaussian noise and frequency signal interference, pulse noise is another additive noise source that results in performance deterioration of communication systems, which is mainly caused by spark plug ignition apparatuses of automobiles, switching devices of electrical switches, and lightning. Different from other types of noise, pulse noise signals are characterized by bursts, short pulses, high energy and sharpness. When the amplitude of pulse interference is comparable to that of the communication signal, the energy of the pulse interference is not large, but usually still has a large signal-to-noise ratio (SNR), which does not affect the signal reception. However, if the transmitted communication signal has been attenuated, and the amplitude of local pulse interference is tens or hundreds of times higher than that of the received communication signal, if the receiving amplification gain is set based on the maximum amplitude of the signal, the received SNR will be lowered. As a result, the communication signal cannot be received normally.

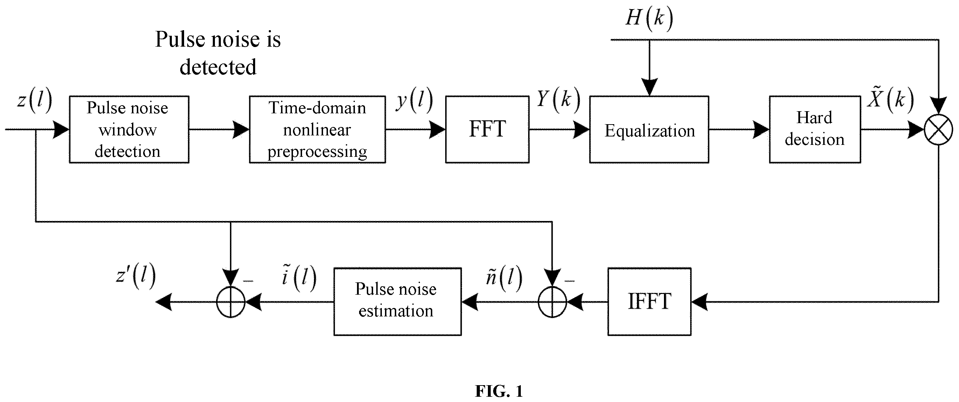

A pulse noise detection and suppression method provided in the Chinese patent entitled *Method for Detecting and Suppressing Periodic Pulse Noise of a Power Line Carrier Based on OFDM* (Chinese patent No. CN201410566690.7) can only detect, identify, and suppress periodic pulses, and cannot cope with lots of random pulse interference on site. The principle block diagram of a pulse detection and processing method provided in Joint Suppression of Pulse Noise in Time and Frequency Domain for OFDM System issued on Microcomputer Information in February 2009 is shown in FIG. 1. First, a time domain signal $z(l)$ entering a digital baseband first passes through a pulse noise window detector. The length of a detection window is set to $N_{FFT}$, and the energy threshold is set to $T_H$. When the number of times exceeding the threshold in the window exceeds the maximum number of times $N_0$, it is determined that pulse noise exists. The pulse noise is limited through time-domain nonlinear preprocessing. Further, the sampling point exceeding the threshold A is set to zero to obtain the nonlinear preprocessed signal $y(l)$:

$$ y(l) = \begin{cases} z(l) & |z(l)| < A \\ 0 & |z(l)| \geq A \end{cases} $$

The nonlinear preprocessed signal $y(l)$ is transformed by FFT to obtain $Y(k)$. Assuming that channel state information is $H(k)$, the data symbol $\tilde{X}(k)$ at the receiving terminal is obtained through zero-forcing equalization and hard decision. Therefore, the time domain estimation of the received signal is $(x(l)\circ, \times h(l))_{est}$, the additive noise estimation is $n(l)=z(l)-(x(l)\circ, \times h(l))_{est}$, and further, an obtained pulse noise estimation is $\tilde{i}(l)$. Finally, the time domain sampling signal without pulse noise is $z'(l) = z(l) - \tilde{i}(l)$.

The existing method has the following shortcomings. Firstly, the existing method determines, based on the quantity of times that the threshold is exceeded in the detection window, whether the pulse interference exists or not, and may be affected by other interference such as narrowband interference, resulting in misjudgment. Secondly, the existing method does not consider the cooperation of gain amplification and sampling. Pulse processing is directly performed on the digital sampling signal. Therefore, when the pulse interference is strong, the amplitude of remaining useful signal data is very low, the accuracy of sampling effective data is low, a large error exists in analyzing communication data, and even the communication data cannot be parsed. Thirdly, the pulse interference processing by simply comparing each sampling point with the threshold A and setting the larger sampling point to zero does not consider the time-effect characteristics of the interference of a pulse peak on subsequent sampling points, failing to completely suppress the pulse interference. Fourthly, the method for determining the value of the threshold A of the pulse is not provided. If the value of the threshold A is too large, the energy of the pulse interference cannot be effectively suppressed. If the value of the threshold A is too small, the useful signal may be damaged. Fifthly, the processing method in which time domain and frequency domain are combined in the existing method is complicated to implement, and only sets a point exceeding the threshold A in the time domain waveform to zero, without increasing the amount of useful information. As a result, the processing performed by the existing method does not increase the receiving gain of communication decoding.

Document EP1180851A3 relates to a turner for digital terrestrial television. The turner has an input section which supplies a sample intermediate signal, for example at zero intermediate frequency and digitized by an ADC, corresponding to a desired reception channel corrupted by interference such as impulsive noise interference. A threshold generator generates a threshold which is larger than a moving average of the amplitudes of consecutive samples and a comparator compares the amplitudes of the samples with the threshold. If a sample amplitude exceeds the threshold, a corrector sets to zero the sample before processing by a fast Fourier transform. The threshold generator excludes samples which have been set to zero from the moving average.

Document A. Bamidele et al.: "A New Approach to Peak Threshold Estimation for Impulsive Noise Reduction Over Power Line Fading Channels", IEEE SYSTEMS JOURNAL, IEEE, US, vol. 13, no. 2, 1 June 2019 (2019-06-01), pages 1682-1693, XP01 1727436, ISSN: 1932-8184, DOI: 10.1109/JSYST.2018.2808230 discusses that impulse noise (IN) is a major component that degrades signal integrity in power line communication (PLC) system. PLC systems driven by orthogonal frequency-division multiplexing (OFDM) have Rayleigh distributed amplitudes. Based on the dynamic nature of each OFDM symbol, peak amplitude of the symbol was recently shown to be a suitable threshold for detecting IN, and this technique outperforms the conventional optimal blanking (COB) scheme. This Reference improve the dynamic peak-based threshold estimation (DPTE) scheme that relies on the OFDM Rayleigh distributed amplitudes by converting the default Rayleigh distribution to uniform distribution to unveil IN with power levels below that of the conventional peak signal. Then, nonlinear mitigation processing on the received signals, whose amplitudes exceed the uniformly distributed amplitude using blanking, a scheme that may be referred to as uniformly distributed DPTE (U-DPTE). This reference also proposes a novel threshold criterion that compensates the Gaussian noise power-level amplification (after equalization) for achieving the optimal SNR over a log-normal multipath fading channel.

## SUMMARY

In order to effectively determine whether pulse interference exists or not in time domain, select processing parameters to suppress the pulse interference based on receiver performance and a distribution state of the interference in time domain, and dynamically set an amplification gain and a pulse interference determining threshold, the present disclosure provides a method and circuit for suppressing pulse interference in encoding and decoding communications.

In one aspect, the present disclosure relates to a method for suppressing pulse interference in encoding and decoding communications, including:

step 1: amplifying, by a controllable gain circuit, an input communication signal by an initial amplification gain $G_1$, such that an amplified communication signal enters a sampling circuit; identifying, by a preamble detection circuit, a preamble part $x_1(i)$ in the sampling signal, and decomposing the sampling signal to obtain a valid preamble signal $T_1(i)$; and decomposing, by a frequency interference detection circuit, a frequency interference signal part $D_1(i)$ from $x_1(i)-T_1(i)$, such that the other interference signal part $N_1(i)$ is obtained, namely, $N_1(i)=x_1(i)-T_1(i)-D_1(i)$, where i=1, 2, ..., R, and R represents a length of a sampling point identified by a preamble;

step 2: setting an amplification gain $G_2$ of the controllable gain circuit based on the valid preamble signal $T_1(i)$ and the other interference signal part $N_1(i)$, which includes the following two cases:

2-1): if a ratio of energy $P_{N1}$ of the other interference signal part $N_1(i)$ to energy $P_{T1}$ of the valid preamble signal $T_1(i)$, namely, $P_{N1}/P_{T1}$, is less than a preset communication signal decoding threshold $H_1$, determining that it is not necessary to suppress pulse interference in the other interference signal part $N_1(i)$, setting the amplification gain $G_2$ of the controllable gain circuit to a maximum amplification value satisfying that a current amplitude $x_1(i)$ does not exceed a sampling range after gain adjustment, and setting a pulse interference determining peak value $V_{HP}$ to 0 and a quantity of pulse interference propagation points in time domain $C_{impact}$ to 0, where the communication signal decoding threshold $H_1$ is a lower threshold that is obtained through simulation evaluation and that is of receiving and decoding performance of the communication signal for correctly receiving data under other interference excluding frequency signal interference; or

2-2): if a ratio of energy $P_{N1}$ of the other interference signal part $N_1(i)$ to energy $P_{T1}$ of the valid preamble signal $T_1(i)$, namely, $P_{N1}/P_{T1}$, is not less than a communication signal decoding threshold $H_1$, calculating a pulse interference determining peak value $V_{HP}$ based on a signal peak value $V_{T1peak}$ of the valid preamble signal:

$$V_{HP} = H_P \cdot V_{T1peak}$$

where according to a communication encoding mode, when a signal peak value of communication payload data after the preamble signal is greater than the peak value $V_{T1peak}$ of the preamble signal, $H_P$ represents a ratio of the signal peak value of the communication payload data to the peak value of the preamble signal; if the signal peak value of the communication payload data is not greater than the peak value of the preamble signal , a value of $H_P$ is 1; and further, the quantity of pulse interference propagation points in time domain $C_{impact}$ is calculated by using a pulse interference time-domain bandwidth function $G_{impact}(\cdot)$:

$$C_{impact} = G_{impact}\left(V_{HP} / V_{N1peak}\right)$$

where $V_{N1peak}$ represents a maximum peak value of the other interference signal part $N_1(i)$, and $G_{impact}(\cdot)$ represents the pulse interference time-domain bandwidth function obtained according to characteristics of a receiving circuit of a receiver;

then each point of the other interference signal part $N_1(i)$ is compared with the pulse interference determining peak value $V_{HP}$, to obtain a pulse peak value determining sequence $P_1(i)$:

$$P_1(i) = \begin{cases} 0 & \left|N_1(i)\right| < V_{HP} \\ 1 & \left|N_1(i)\right| \geq V_{HP} \end{cases}$$

where an all-zero sequence $Q_1(i)=0$ is first set, where i=1, 2, ..., R, each $P_1(i)$ is scanned, and if $P_1(i)=1$, $Q_1(i)=Q_1(i+1)=...= Q_1(i+C_{impact}-1)=1$, such that a pulse interference identification sequence $Q_1(i)$ is obtained; and processing is further performed based on the following two cases:

2-2-1): if $\left(\sum_{i=1}^{R} Q_1(i)\right)\Big/ R > H_{dec}$ , where $H_{dec}$ represents that a ratio of data set to 0 in encoded data still meets an upper limit ratio of a data receiving success rate indicator, determining that the pulse interference cannot be identified in the other interference signal part $N_1(i)$, and setting the amplification gain $G_2$ of the controllable gain circuit to the maximum amplification value satisfying that the current amplitude $x_1(i)$ does not exceed the sampling range after gain adjustment; or

2-2-2): if $\left(\sum_{i=1}^{R} Q_1(i)\right)\Big/ R \leq H_{dec}$ , determining that the pulse interference is identified in the other interference signal part $N_1(i)$, and setting the amplification gain $G_2$ of the controllable gain circuit to a maximum amplification value satisfying that a signal with an amplitude corresponding to $max(V_{HP}, V_{D1peak})$ does not exceed the sampling range after gain adjustment, where $V_{D1peak}$ represents the maximum peak value of the frequency interference signal part $D_1(i)$; and

step 3: amplifying the communication signal including payload data after the preamble signal by the amplification gain $G_2$ and sampling the communication signal, and initially setting a pulse interference delay counter N(0) to 0, where

frequency interference suppression is first performed on the sampling communication signal data $x_2(i)$ to obtain a signal $y_2(i)$ after frequency interference suppression: $y_2(i) = x_2(i) - D_2(i)$, where $D_2(i)$ represents a frequency interference signal, and $i$ is a positive integer;

for the case 2-1) and the case 2-2-1) described in step 2, the signal $y_2(i)$ after frequency interference suppression is input as an input signal $z_2(i)=y_2(i)$ into a subsequent decoding and demodulation circuit; and for the case 2-2-2) described in step 2, pulse interference suppression is adopted, where the pulse interference suppression specifically includes: comparing an absolute value $|y_2(i)|$ of the signal $y_2(i)$ after frequency interference suppression with a pulse interference determining threshold $V'_{HP}$, and setting the pulse interference delay counter $N(i)$:

$$N(i) = \begin{cases} C_{impact} & \left|y_2(i)\right| \geq V'_{HP} \\ N(i-1)-1 & \left|y_2(i)\right| < V'_{HP} \ \text{ and } \ N(i-1) > 0 \\ 0 & \left|y_2(i)\right| < V'_{HP} \ \text{ and } \ N(i-1) = 0 \end{cases}$$

where $V'_{HP}=V_{HP}\times G_1/G_2$; and the signal $z_2(i)$ after pulse interference suppression is calculated according to the following formula:

$$z_2(i) = \begin{cases} 0 & N(i) > 0 \\ y_2(i) & N(i) = 0 \end{cases};$$

and therefore, the signal $z_2(i)$ is further decoded and demodulated subsequently to finally obtain the payload data.

In some implementation solutions, when no communication signal is found, the initial amplification gain $G_1$ is set to a maximum receiving gain corresponding to a maximum amplitude of the communication signal when the sampling circuit is not saturated.

In some implementation solutions, a form of the pulse interference time-domain bandwidth function $G_{impact}(\cdot)$ is as follows:

$$G_{impact}(x) = \max\left(\text{ceil}\left(D_{impact} \cdot \ln\left(k_{impact}/H_L\right) - D_{impact} \cdot \ln(x)\right), 0\right)$$

where if an impact response characteristic of the receiver attenuates with the amplitude of a sampling point number, a normalized envelope of the impact response characteristic of the receiver is as follows:

$$H_{impact}(i) = k_{impact} \cdot e^{-\frac{i}{D_{impact}}}$$

where $k_{impact}$ represents an initial impact attenuation value, $D_{impact}$ represents an impact response attenuation rate of the receiver, $Hz$, represents the maximum amplitude interference threshold of correct demodulation of a payload signal, and the function ceil(x) represents a smallest integer greater than $x$.

In other aspect, the present disclosure relates to a corresponding circuit for suppressing pulse interference in encoding and decoding communications,

In some implementation solutions, the present disclosure relates to the method and circuit for suppressing pulse interference in encoding and decoding communications. Firstly, the method analyzes and detects the frequency interference and the pulse interference by identifying the preamble of the communication signal to ensure characteristics of the original signal, which makes it easy to identify the valid preamble signal, the frequency interference signal, and the pulse interference signal in the communication signal. Furthermore, the method in the present disclosure further utilizes a detection result to perform frequency interference suppression and pulse interference suppression on a subsequent signal, and completes decoding and parsing. Such a manner in which the preamble part and the subsequent signal are separately processed is also identical as an overall preamble signal identification link in the current encoding and decoding communications, which makes it easy to implement a system of the receiver. Secondly, based on a signal analysis result, the present disclosure dynamically sets the pulse interference determining peak value $V_{HP}$ corresponding to the amplification gain $G_1$ and the pulse interference determining peak value $V'_{HP}$ corresponding to the amplification gain $G_2$. This dynamic setting method can adapt to changing communication channels and interference on site. Thirdly, the present disclosure processes a time-domain propagation characteristics of the pulse interference, fully combines a pulse receiving and transmitting characteristic function $G_{impact}(\cdot)$ of the receiver, and dynamically sets a time-domain influence range of the pulse interference based on pulse strength. In conclusion, the method for suppressing pulse interference in encoding and decoding communications in the present disclosure can greatly improve an effect of suppressing pulse interference.

## BRIEF DESCRIPTION OF THE DRAWINGS

FIG. 1 is a schematic diagram of an existing pulse interference suppression method;

FIG. 2 is a schematic structural diagram of a circuit for suppressing pulse interference in encoding and decoding communications according to an implementation solution of the present disclosure;

FIG. 3 is a flowchart of identifying pulse interference and setting an amplification gain $G_2$ based on a preamble part of a communication signal according to an implementation solution of the present disclosure;

FIG. 4 is a schematic curve diagram of a relationship between a signal-to-noise ratio (SNR) and a demodulation data block error rate (BLER) if corresponding pulse interference is not suppressed when a diversity copy TMI mode is 4 according to an implementation solution of the present disclosure;

FIG. 5 is a schematic diagram of measured waveforms of preamble and payload parts of a communication signal of a low-voltage power line carrier when there is no noise and interference according to an implementation solution of the present disclosure;

FIG. 6 is a schematic curve diagram of a relationship between a bit error rate corresponding to modulated data which is subjected to 10 us pulse interference and processed by zero-setting and a pulse duty cycle when an SNR of white Gaussian noise is 0, 2, and 8 dB according to a specific embodiment of the present disclosure; and

FIG. 7 is a schematic curve diagram of a relationship between another SNR and a data block error rate (BLER) after corresponding frequency interference and pulse interference are suppressed when a diversity copy TMI mode is 4 according to an implementation solution of the present disclosure.

## DETAILED DESCRIPTION OF THE EMBODIMENTS

According to an aspect, the present disclosure relates to a method for suppressing pulse interference in encoding and decoding communications, including the following steps.

Step 1: A controllable gain circuit 201 amplifies an input communication signal by an initial amplification gain $G_1$, such that an amplified signal enters a sampling circuit 202; a preamble detection circuit 203 identifies 301 a preamble part $x_1(i)$ of the sampling signal, and decomposes the sampling signal to obtain a valid preamble signal $T_1(i)$; and a frequency interference detection circuit 204 decomposes 302 a frequency interference signal part $D_1(i)$ from $x_1(i)$-$T_1(i)$, such that the other interference signal part $N_1(i)$ is obtained, namely, $N_1(i)=x_1(i)-T_1(i)-D_1(i)$, where i=1, 2, ..., $R$, and $R$ represents a length of a sampling point identified by a preamble.

Step 2: Set an amplification gain $G_2$ of the controllable gain circuit 201 based on the valid preamble signal $T_1(i)$ and the other interference signal part $N_1$(i) ($G_1$ and $G_2$ correspond to preamble and payload parts of a communication signal, and are used for amplification, $G_1$ corresponds to the preamble part of the communication signal, and $G_2$ corresponds to the payload part), which includes the following two cases 303.

2-1): If a ratio of energy $P_{N1}$ of the other interference signal part $N_1$(i) to energy $P_{T1}$ of the valid preamble signal $T_1(i)$, namely, $P_{N1}/P_{T1}$, is less than a preset communication signal decoding threshold $H_1$, determine that it is not necessary to suppress pulse interference in the other interference signal part $N_1$(i), set 309 the amplification gain $G_2$ of the controllable gain circuit 201 to a maximum amplification value satisfying that a current amplitude $x_1(i)$ does not exceed a sampling range after gain adjustment, and set a pulse interference determining peak value $V_{HP}$ to 0 and a quantity of pulse interference propagation points $C_{impact}$ in time domain to 0, where the communication signal decoding threshold $H_1$ is a lower threshold that is obtained through simulation evaluation and that is of receiving and decoding performance of the communication signal for correctly receiving data under other interference excluding frequency signal interference.

2-2): If a ratio of energy $P_{N1}$ of the other interference signal part $N_1(i)$ to energy PT1 of the valid preamble signal $T_1(i)$, namely, $P_{N1}/P_{T1}$, is not less than a communication signal decoding threshold $H_1$, calculate 304 a pulse interference determining peak value $V_{HP}$ based on a signal peak value $V_{T1peak}$ of the valid preamble signal:

$$V_{HP} = H_P \cdot V_{T1peak}$$

According to a communication encoding mode, when a signal peak value of communication payload data after the preamble signal is greater than the peak value $V_{T1peak}$ of the preamble signal, $H_P$ represents a ratio of the signal peak value of the communication payload data to the peak value of the preamble signal; if the signal peak value of the communication payload data is not greater than the peak value of the preamble signal, a value of $H_P$ is 1; and further, the quantity of pulse interference propagation points $C_{impact}$ in time domain is calculated 305 by using a pulse interference time-domain bandwidth function $G_{impact}(\cdot)$:

$$C_{impact} = G_{impact}(V_{HP} / V_{N1peak})$$

where $V_{N1peak}$ represents a maximum peak value of the other interference signal part $N_1(i)$, and $G_{impact}(\cdot)$ represents the pulse interference time-domain bandwidth function obtained according to characteristics of a receiving circuit of a receiver.

Then each point of the other interference signal part $N_1(i)$ is compared with the pulse interference determining peak value $V_{HP}$, to obtain 306 a pulse peak value determining sequence $P_1(i)$:

$$P_1(i) = \begin{cases} 0 & |N_1(i)| < V_{HP} \\ 1 & |N_1(i)| \geq V_{HP} \end{cases}$$

where an all-zero sequence $Q_1(i)=0$ is first set, where i=1, 2, ..., R, each $P_1(i)$ is scanned, and if $P_1(i)=1$, $Q_1(i) = Q_1(i+1)$ = ... = $Q_1(i+C_{impact}-1) = 1$, such that a pulse interference identification sequence $Q_1(i)$ is obtained 307; and processing is further performed based on the following two cases 308.

$$\left(\sum_{i=1}^{R} Q_1(i)\right)\Big/ R > H_{dec}$$

2-2-1): If                    , where $H_{dec}$ represents that a ratio of data set to 0 in encoded data still meets an upper limit ratio of a data receiving success rate indicator (the upper limit ratio of the data receiving success rate indicator corresponds to a threshold in communication), determine that the pulse interference cannot be identified in the other interference signal part $N_1(i)$, and set 309 the amplification gain $G_2$ of the controllable gain circuit 201 to the maximum amplification value satisfying that the current amplitude $x_1(i)$ does not exceed the sampling range after gain adjustment (the amplification gain in communication is a definite term, and its amplification factor or coefficient is no longer described), where the sampling range is a range between a minimum value and a maximum value of sampling data output by the sampling circuit 202, and when this range is exceeded, for example, when there is a larger signal, the sampling circuit 202 also outputs data of the maximum value only. Different gears are set for the amplification gain of the controllable gain circuit 201, and are different in different designs.

$$\left(\sum_{i=1}^{R} Q_1(i)\right)\Big/ R \leq H_{dec}$$

2-2-2): If                    , determine that the pulse interference is identified in the other interference signal part $N_1(i)$, and set 310 the amplification gain $G_2$ of the controllable gain circuit 201 to a maximum amplification factor value satisfying that a signal with an amplitude corresponding to max($V_{HP}$, $V_{D1peak}$) does not exceed the sampling range after gain adjustment, where $V_{D1peak}$ represents a maximum peak value of the frequency interference signal part $D_1(i)$.

Step 3: Amplify the communication signal including payload data after the preamble signal by the amplification gain $G_2$ and sample the communication signal, and initially set a pulse interference delay counter 208 N(0) to 0.

Frequency interference suppression is first performed on the sampling communication signal data $x_2(i)$ to obtain a signal $y_2(i)$ after frequency interference suppression: $y_2(i) = x_2(i)-D_2(i)$, where $D_2(i)$ represents a frequency interference signal, and $i$ is a positive integer.

For the case 2-1) and the case 2-2-1) described in step 2, the signal $y_2(i)$ after frequency interference suppression is input as an input signal $z_2(i)=y_2(i)$ into a subsequent decoding and demodulation circuit 210; and for the case 2-2-2) described in step 2, pulse interference suppression is adopted, where the pulse interference suppression specifically includes: comparing an absolute value $|y_2(i)|$ of the signal $y_2(i)$ after frequency interference suppression with a pulse interference determining threshold $V'_{HP}$, and setting the pulse interference delay counter 208 $N(i)$:

$$N(i) = \begin{cases} C_{impact} & |y_2(i)| \geq V'_{HP} \\ N(i-1)-1 & |y_2(i)| < V'_{HP} \text{ and } N(i-1) > 0 \\ 0 & |y_2(i)| < V'_{HP} \text{ and } N(i-1) = 0 \end{cases}$$

where $V'_{HP}=V_{HP} \times G_1/G_2$; and the signal $z_2(i)$ after pulse interference suppression is calculated according to the following formula:

$$z_2(i) = \begin{cases} 0 & N(i) > 0 \\ y_2(i) & N(i) = 0 \end{cases}.$$

Therefore, the signal $z_2(i)$ is further decoded and demodulated subsequently to finally obtain the payload data.

In some implementation solutions, when no communication signal is found, the initial amplification gain $G_1$ is

set to a maximum receiving gain corresponding to a maximum amplitude of the communication signal when the sampling circuit 202 is not saturated.

In some implementation solutions, a form of the pulse interference time-domain bandwidth function $G_{impact}(\cdot)$ is as follows

$$G_{impact}(x) = \max\left(\text{ceil}\left(D_{impact} \cdot \ln\left(k_{impact}/H_L\right) - D_{impact} \cdot \ln(x)\right), 0\right)$$

where if an impact response characteristic of the receiver attenuates with an amplitude of a sampling point number, a normalized envelope of the impact response characteristic of the receiver is as follows:

$$H_{impact}(i) = k_{impact} \ e^{\frac{i}{D_{impact}}}$$

where $k_{impact}$ represents an initial impact attenuation value, $D_{impact}$ represents an impact response attenuation rate of the receiver, $Hz$, represents a maximum amplitude interference threshold of correct demodulation of a payload signal, and the function ceil(x) represents a smallest integer greater than x.

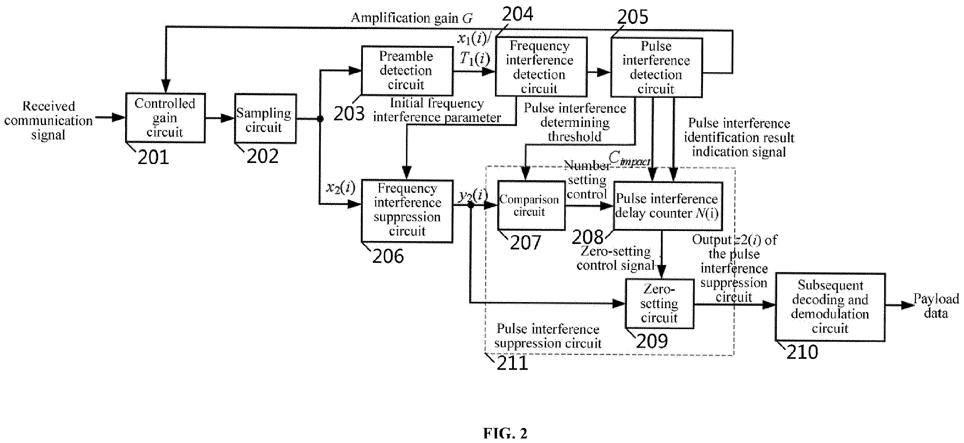

According to another aspect, the present disclosure further relates to a circuit for suppressing pulse interference in encoding and decoding communications. FIG. 2 is a schematic structural diagram of a circuit for suppressing pulse interference in encoding and decoding communications according to an implementation solution of the present disclosure. The circuit for suppressing pulse interference in encoding and decoding communications includes a controllable gain circuit 201, a sampling circuit 202, a preamble detection circuit 203, a frequency interference detection circuit 204, a pulse interference detection circuit 205, a frequency interference suppression circuit 206, a pulse interference suppression circuit 211, and a subsequent decoding and demodulation circuit 210.

A receiving signal input pin of the controllable gain circuit 201 is configured to receive a communication signal, and a gain amplified-signal output pin of the controllable gain circuit 201 is connected to a signal input pin of the sampling circuit 202.

An output of the sampling circuit 202 is divided into two paths: a first sampling signal output connected to an input pin of the preamble detection circuit 203, and a second sampling signal output connected to an input pin of the frequency interference suppression circuit 206.

A signal output pin of the preamble detection circuit 203 is connected to a signal input pin of the frequency interference detection circuit 204, a signal output pin of the frequency interference detection circuit 204 is connected to a signal input pin of the pulse interference detection circuit 205, and an amplification gain control signal output pin of the pulse interference detection circuit 205 is connected to an amplification gain control signal input pin of the controllable gain circuit 201.

A frequency interference-suppressed signal output pin of the frequency interference suppression circuit 206 is connected to a signal input pin of the pulse interference suppression circuit 211, and a signal output pin of the pulse interference suppression circuit 211 is connected to a signal input pin of the subsequent decoding and demodulation circuit 210.

An output pin that is of the frequency interference detection circuit 204 and used to output an initial parameter signal of frequency interference is connected to an input pin that is of the frequency interference suppression circuit 206 and used to input the initial parameter signal of the frequency interference, and an output pin that is of the pulse interference detection circuit 205 and used to output a pulse interference identification result indication signal is connected to an output pin that is of the pulse interference suppression circuit 211 and used to input the pulse interference identification result indication signal.

In some implementation solutions, the pulse interference suppression circuit 211 includes a comparison circuit 207, a pulse interference delay counter circuit 208, and a zero-setting circuit 209, where a frequency interference-suppressed signal input pin of the comparison circuit 207 is connected to the frequency interference suppressed signal $y_2(i)$ output pin of the frequency interference suppression circuit 206, a comparison signal output pin of the comparison circuit 207 is connected to a number setting control signal output pin of the pulse interference delay counter circuit 208, a zero-setting control signal output pin of the pulse interference delay counter circuit 208 is connected to a zero-setting control signal input pin of the zero-setting circuit 209, the frequency interference suppressed signal $y_2(i)$ output pin of the frequency interference suppression circuit 206 is further connected to a signal input pin of the zero-setting circuit 209, and an output pin that is of the zero-setting circuit 209 and used to output a signal $z_2(i)$ output by the pulse interference suppression circuit 211 is connected to the signal input pin of the subsequent decoding and demodulation circuit 210.

A signal output by the pulse interference detection circuit 205 includes a pulse interference determining threshold

$V'_{HP}$, a quantity of pulse interference propagation points $C_{impact}$ in time domain, and the pulse interference identification result indication signal.

The preamble detection circuit 203, the frequency interference detection circuit 204, the pulse interference detection circuit 205, the frequency interference suppression circuit 206, the pulse interference suppression circuit 211, and the subsequent decoding and demodulation circuit 210 are in a time-sharing working state; when no received data is found, the preamble detection circuit 203, the frequency interference detection circuit 204, and the pulse interference detection circuit 205 are in a working state, and receive and process sampling data to find a valid preamble of a communication received signal; and after a valid preamble signal is identified and discovered, the preamble detection circuit 203, the frequency interference detection circuit 204, and the pulse interference detection circuit 205 stop processing the sampling data when receiving data, and the frequency interference suppression circuit 206, the pulse interference suppression circuit 211, and the subsequent decoding and demodulation circuit 210 process the sampling data, and stop working when the data is decoded and demodulated.

The preamble detection circuit 203 sends a preamble part $x_1(i)$ of a communication signal at point $R$ and the valid preamble signal $T_1(i)$ to the frequency interference detection circuit 204 after finding that the communication received signal contains the valid preamble signal $T_1(i)$.

The frequency interference detection circuit 204 analyzes a frequency interference signal part $D_1(i)$ in the preamble part $x_1(i)$ of the communication signal, obtains an initial frequency interference parameter, and further calculates the other interference signal part $N_1(i)$ according to the following formula: $N_1(i)=x_1(i)-T_1(i)-D_1(i)$.

The pulse interference detection circuit 205 calculates a pulse interference determining peak value $V_{HP}$, the quantity of pulse interference propagation points $C_{impact}$ in time domain, and a pulse interference identification sequence $Q_1(i)$ based on the valid preamble signal $T_1(i)$ and the other interference signal part $N_1(i)$; when $$\left(\sum_{i=1}^{R} Q_1(i)\right)\bigg/ R \leq H_{dec}$$, provides a valid pulse interference identification result indication signal, and takes, as an amplification gain $G$ of the controllable gain circuit 201, a maximum amplification value satisfying that a current amplitude $\max(V_{HP}, V_{D1peak})$ does not exceed a sampling range after gain adjustment; and if the pulse interference identification result indication signal is invalid, takes, as the amplification gain $G$ of the controllable gain circuit 201, a maximum amplification value satisfying that a current amplitude $x_1(i)$ does not exceed the sampling range after gain adjustment.

The frequency interference suppression circuit 206 starts to perform frequency interference suppression on input sampling communication signal data $x_2(i)$ based on the initial frequency interference parameter input by the frequency interference detection circuit 204 after the valid preamble signal is identified and found, tracks and analyzes a frequency interference signal $D_2(i)$, and outputs a signal $y_2(i) = x_2(i) - D_2(i)$ after frequency interference suppression.

The pulse interference suppression circuit 211 includes the comparison circuit 207, the pulse interference delay counter circuit 208, and the zero-setting circuit 209; when the pulse interference identification result indication signal is invalid, the comparison circuit 207, the pulse interference delay counter circuit 208, and the zero-setting circuit 209 do not work, such that an output $z_2(i)$ of the pulse interference suppression circuit 211 is equal to the signal output after frequency interference suppression, in other words, $z_2(i)=y_2(i)$; or when the pulse interference identification result indication signal is valid, the signal $y_2(i)$ after frequency interference suppression is input to the comparison circuit 207, and is compared with the pulse interference determining threshold $V'_{HP}=V_{HP}\times G_1/G_2$; a comparison result mark is input to a pulse interference delay counter 208; when $|y_2(i)| \geq V'_{HP}$, a value $N(i)$ of the pulse interference delay counter 208 is set to $C_{impact}$; otherwise, the value $N(i)$ of the pulse interference delay counter 208 is decremented by 1 at each sampling point until it becomes 0; and the value $N(i)$ of the pulse interference delay counter 208 is input to the zero-setting circuit 209 to control the output $z_2(i)$ of the pulse interference suppression circuit 211 to be equal to 0 when $N(i)>0$, or to be equal to the signal after frequency interference suppression when $N(i)=0$, namely, $z_2(i)=y_2(i)$.

Finally, the output $z_2(i)$ of the pulse interference suppression circuit 211 is input to the subsequent decoding and demodulation circuit 210 to obtain decoded and demodulated payload data.

A specific implementation of the present disclosure is applied to a power line carrier communication chip that satisfies the requirement in Part 4-1: Physical Layer Communication Protocol in the State Grid Corporation and Enterprise Standard *Q/GDW 11612.41-2016 Technical Specification for Interconnection and Interworking of Low-Voltage Power Line Broadband Carrier Communication.* Since a power line carrier communication signal is very susceptible to various kinds of pulse signal interference due to power payload, the pulse interference needs to be effectively suppressed.

FIG. 2 shows a circuit structure according to a specific embodiment. The preamble detection circuit 203, the frequency interference detection circuit 204, the pulse interference detection circuit 205, the frequency interference suppression circuit 206, the pulse interference suppression circuit 211, and the subsequent decoding and demodulation circuit 210 each can implement a corresponding processing algorithm by using a programmable logic circuit.

A to-be-received communication signal is first input to the controllable gain circuit 201, and gain amplification is performed on the to-be-received communication signal under the control of the amplification gain $G$ output by the pulse interference detection circuit 205. A maximum peak value of a sampled voltage signal corresponding to a differential input of the sampling circuit 202 is 1.2 V, and a maximum peak value of transmitting a power line communication signal is 12 V Therefore, an amplification factor of a minimum gear of the controllable gain circuit 201 of the chip is set to $G_1$=0.1. When no communication signal is received, the amplification factor $G$ is increased to $G_1$. Therefore, a signal within 12 V will not be clipped by the sampling circuit 202.

After gain amplification and sampling are performed on a signal on a power line, a digital signal is input to the preamble detection circuit 203 to identify a preamble signal. And the appearance of the preamble signal is obtained based on across-correlation preamble identification algorithm with a known local preamble sequence, and a component $T_1(i)$ of the valid preamble signal is separated from the received signal $x_1(i)$.

The frequency interference detection circuit 204 determines a single-frequency interference signal through frequency analysis of $x_1(i)$-$T_1(i)$, identifies a quantity of single-frequency components $M_D$ and determines a frequency $f_k$, an amplitude $A_k$, and a phase $\varphi_k$ of each single-frequency component based on the configuration, to obtain a frequency interference signal part $D_2(i)$:

$$D_2(i) = \sum_{k=1}^{M_D} A_k \cdot \sin\left(2\pi \frac{f_k}{f_s} \cdot i + \varphi_k\right)$$

where i=1, 2, ..., $R$, $R$ represents a length of a sampling point identified by a preamble, and $f_s$ represents a sampling rate of the sampling circuit 202, and is set to 25 Mhz. $f_k$ is a frequency of the single-frequency interference signal. Therefore, the other interference signal part $N_1(i)$ is obtained according to the following formula: $N_1(i)=x_1(i)-T_1(i)-D_1(i)$.

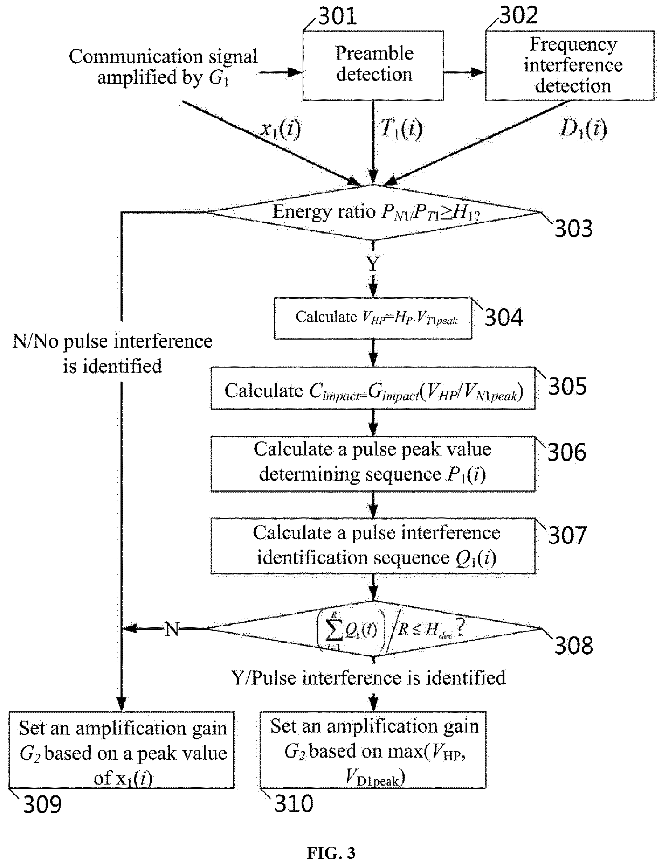

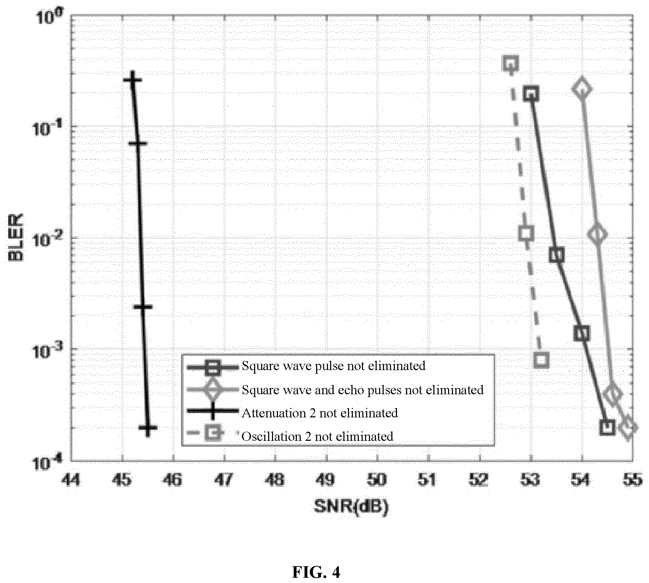

The pulse interference detection circuit 205 further identifies, based on the preamble part of the communication signal, whether a current communication received signal has pulse interference, and simultaneously obtains an amplification gain $G_2$ set for a payload communication signal part, as shown in FIG. 3. The pulse interference detection circuit 205 calculates a ratio of energy $P_{N1}$ of the other interference signal part $N_1(i)$ and energy $P_{T1}$ of the valid preamble signal $T_1(i)$, namely, $P_{N1}/P_{T1}$, and compares the ratio with a communication signal decoding threshold $H_1$. A value of $H_1$ is estimated as follows: FIG. 4 shows a curve of a relationship between an SNR of corresponding pulse interference and a demodulation data block error rate BLER in a frequency band 1 from 2.4 M to 5.6 MHz when a diversity copy TMI mode is 4. Based on the curve shown in FIG. 4, when the SNR obtained when the pulse interference is not eliminated is greater than 55 dB, the communication data block can be effectively received. Therefore, the communication signal decoding threshold $H_1$ is equal to 3.16*10$^{-6}$.

The pulse interference used in the test in FIG. 4 is a square wave with a cycle of 10 us and a pulse width of 1 us, namely, a duty cycle of 10%. An echo has an amplitude coefficient of -0.6 and a delay of 0.7 us. Attenuated and oscillated pulse interference is obtained by processing the original square wave by using the following function:

$$G(z) = \left(\frac{\omega_0^2}{s^2 + 2\xi\omega_0 \cdot s + \omega_0^2}\right)_{|s=\frac{2}{T_s}\cdot\frac{z-1}{z+1}}$$

where $T_s$ represents a signal sampling cycle, $T_s$=1/$f_s$=40 ns, $\xi$ represents a damping coefficient, and $\omega_0$ represents a natural frequency. In the corresponding test, pulse attenuation parameters are set as follows: $\xi$=2, and $\omega$=4$\pi$×10$^6$. Pulse oscillation parameters are set as follows: $\xi$=0.3, and $\omega_0$=4$\pi$×10$^6$.

If $P_{N1}/P_{T1}$ is less than $H_1$, the amplification gain $G_2$ is set to a maximum amplification value satisfying that a current amplitude $x_1(i)$ does not exceed a sampling range after gain adjustment. In addition, a pulse interference determining peak value $V_{HP}$ is set to 0, and a quantity of pulse interference propagation points $C_{impact}$ in time domain is set to 0.

If $P_{N1}/P_{T1}$ is not less than $H_1$, the pulse interference determining peak value $V_{HP}$ is calculated based on a signal peak value $V_{T1peak}$ of the valid preamble signal $T_1(i)$:

$$V_{HP} = H_P \cdot V_{T1peak}$$

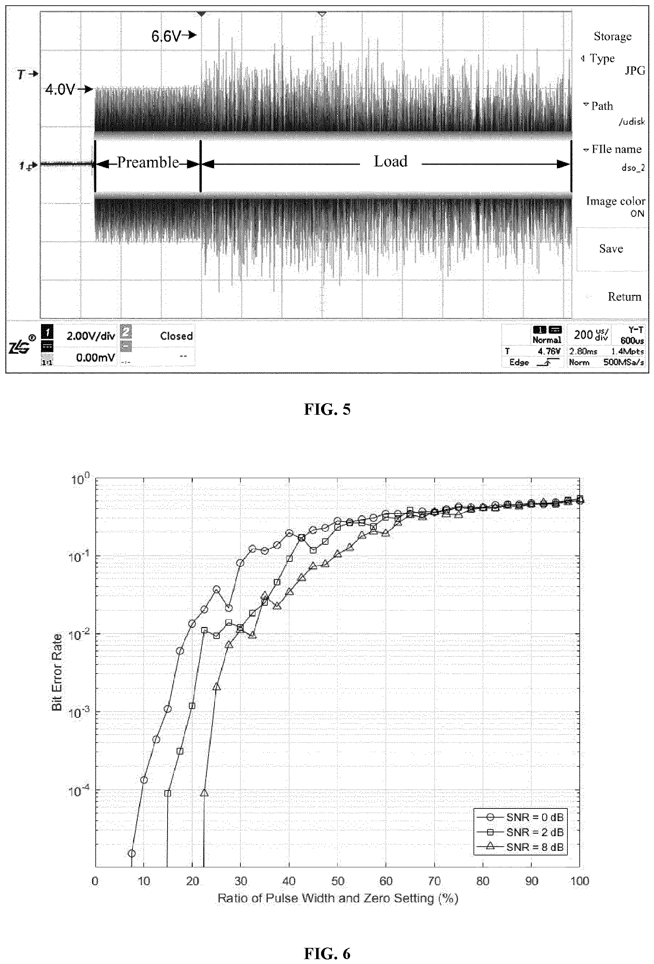

where $H_P$ represents a ratio of a signal peak value of communication payload data to the peak value of the preamble signal, and is not less than 1. Based on measured waveforms of preamble and payload parts of a communication signal of a low-voltage power line carrier when there is no noise and interference in FIG. 5, the peak value of the payload signal is 3.4 V, the peak value of the preamble signal is 2V, and $H_P$ is set to 1.7.

Based on filter circuit parameters of a current carrier receiving channel in a 0.78 M to 12 MHz band-pass filter circuit and a chip, a normalized envelope of an impact response characteristic that is of the carrier receiving channel and attenuates with an amplitude of a sampling point number is as follows:

$$H_{impact}(i) = k_{impact} \cdot e^{-\frac{i}{D_{impact}}}$$

where $k_{impact}$ represents an initial impact attenuation value, and is set to 0.25, $D_{impact}$ represents an impact response attenuation rate of a receiver, and is set to 31.2, and $H_L$ represents a maximum amplitude interference threshold of correct demodulation of a payload signal, and is set to 0.3; and therefore, a form of a pulse interference time-domain bandwidth function $G_{impact}(\cdot)$ is as follows:

$$G_{impact}(x) = \max\left(\text{ceil}\left(D_{impact} \cdot \ln\left(k_{impact}/H_L\right) - D_{impact} \cdot \ln(x)\right), 0\right)$$
$$= \max\left(\text{ceil}\left(-5.7 - 31.2 \cdot \ln(x)\right), 0\right)$$

Therefore, the quantity of pulse interference propagation points $C_{impact}$ in time domain is calculated according to the following formula:

$$C_{impact} = \max\left(\text{ceil}\left(-5.7 - 31.2 \cdot \ln(1.7 \cdot V_{T1peak}/V_{N1peak})\right), 0\right).$$

For example, when $V_{N1peak}=V_{T1peak}$, $C_{impact}=0$; and when $V_{N1peak}=4V_{T1peak}$, $C_{impact}=21$.

As shown in FIG. 3, the pulse interference detection circuit 205 compares each point of the other interference signal part $N_1(i)$ with the pulse interference determining peak value $V_{HP}$, to obtain a pulse peak value determining sequence $P_1(i)$:

$$P_1(i) = \begin{cases} 0 & |N_1(i)| < V_{HP} \\ 1 & |N_1(i)| \geq V_{HP} \end{cases}.$$

An all-zero sequence $Q_1(i)=0$ is first set, where i=1, 2, ..., R, each $P_1(i)$ is scanned, and if $P_1(i)=1$, $Q_1(i)=Q_1(i+1)=...=Q_1(i+C_{impact}-1)=1$, such that a pulse interference identification sequence $Q_1(i)$ is obtained.

FIG. 6 is a schematic curve diagram of a relationship between a bit error rate corresponding to modulated data which is subjected to 10 us pulse interference and processed by zero-setting and a pulse duty cycle when an SNR of white Gaussian noise is 0, 2, and 8 dB according to a specific embodiment of the present disclosure. When the SNR of the Gaussian white noise 0, 2, and 8 dB respectively, based on the modulation mode of the low-voltage power line communication in the Q/GDW 11612.41-2016, when the diversity copy is not performed, an OFDM symbol is subjected to 10 us pulse interference and is set to zero. A curve of the relationship between the bit error rate in decoding and a pulse duty cycle is provided. The corresponding SNR can be lower than 2 dB, and an upper limit ratio of data set to 0 in encoded data, namely, $H_{dec}$, is set to 15%. If $\left(\sum_{i=1}^{R} Q_1(i)\right)\Big/R > H_{dec}$, the amplification gain $G_2$ output by the pulse interference detection circuit 205 is set to the maximum amplification value satisfying that the current amplitude $x_1(i)$ does not exceed the sampling range after gain adjustment, and the pulse interference determining peak value $V_{HP}$ and the quantity of pulse interference propagation points $C_{impact}$ in time domain each are set to 0. If $\left(\sum_{i=1}^{R} Q_1(i)\right)\Big/R \leq H_{dec}$, the amplification gain $G_2$ is set to a maximum amplification value satisfying that a signal with an amplitude corresponding to max($V_{HP}$, $V_{D1peak}$) does not exceed the sampling range after gain adjustment, where $V_{D1peak}$ represents a maximum peak value of the frequency interference signal part $D_1(i)$, and the pulse interference determining peak value $V_{HP}$ and the quantity of pulse interference propagation points $C_{impact}$ in time domain are output based on the aforementioned measured values.

Under the control of the amplification gain $G_2$ output by the pulse interference detection circuit 205, a communication payload signal part passes through the controllable gain circuit 201, and is sampled by the sampling circuit 202 to obtain $x_2(i)$. The frequency interference suppression circuit 206 starts to perform frequency interference suppression on the input sampling communication signal data $x_2(i)$ based on frequencies $f_k$, amplitudes $A_k$ and phases $\varphi_k$ that are of the $M_D$ single-frequency interference components and input by the frequency interference detection circuit 204, and the frequency interference signal $D_2(i)$ is as follows:

$$D_2(i) = \sum_{k=1}^{M_D} A_k \cdot \sin\left(2\pi \frac{f_k}{f_s} \cdot i + \varphi_k\right)$$

where i=1, 2, ..., R, R represents a length of a sampling point identified by a preamble, and $f_s$ represents a sampling rate of the sampling circuit 202, and is set to 25 MHz. $f_k$ is the frequency of the single-frequency interference signal. A signal after frequency interference suppression and output by the frequency interference suppression circuit 206 is as follows:

$$y_2(i) = x_2(i) - D_2(i)$$

$y_2(i)$ is input to the pulse interference suppression circuit 211. If the pulse interference determining peak value $V_{HP}$ is 0, an output $z_2(i)$ of the pulse interference suppression circuit 211 is equal to the signal after frequency interference suppression, namely, $z_2(i)=y_2(i)$. If the pulse interference determining peak value $V_{HP}$ is not 0, the following pulse interference suppression is performed: comparing, by the comparison circuit 207, an absolute value $|y_2(i)|$ of $y_2(i)$ with a pulse interference determining threshold $V'_{HP}$, and setting a pulse interference delay counter 208 $N(i)$ according to the following formula:

$$N(i) = \begin{cases} C_{impact} & |y_2(i)| \geq V'_{HP} \\ N(i-1)-1 & |y_2(i)| < V'_{HP} \text{ and } N(i-1) > 0 \\ 0 & |y_2(i)| < V'_{HP} \text{ and } N(i-1) = 0 \end{cases}$$

where $V'_{HP}=V_{HP}\times G_1/G_2$. When $|y_2(i)|\geq V'_{HP}$, the pulse interference delay counter 208 $N(i)$ is set to the quantity of pulse interference propagation points $C_{impact}$ in time domain. When $|y_2(i)|<V'_{HP}$, if the pulse interference delay counter 208 $N(i)$ is not 0, $N(i)$ is decreased by 1 to 0 for each sampling point; if $N(i)$ is 0, 0 is kept. The zero-setting circuit 209 sets $y_2(i)$ to 0 according to the following formula, and obtains the signal $z_2(i)$ after pulse interference suppression:

$$z_2(i) = \begin{cases} 0 & N(i) > 0 \\ y_2(i) & N(i) = 0 \end{cases}.$$

Then, the signal $z_2(i)$ after frequency interference suppression and pulse suppression is further sent to the subsequent decoding and demodulation circuit 210 to obtain decoded and demodulated payload data.

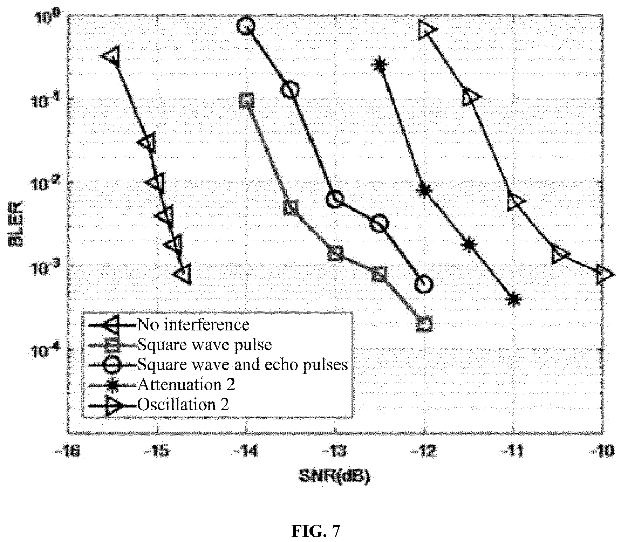

FIG. 7 is a schematic curve diagram of a relationship between another SNR and a data block error rate (BLER) when corresponding frequency interference and pulse interference are suppressed when a diversity copy TMI mode is 4 according to a specific embodiment of the present disclosure. As long as the SNR is higher than -10 dB, interference from square wave pulse, echo pulse, attenuation pulse, and oscillation pulse can be effectively suppressed, and a rate of correctly parsing data blocks is high. Compared with a 45.5 dB to 54.5 dB SNR threshold without pulse suppression in FIG. 4, an SNR threshold in FIG. 7 makes the performance significantly improved.

In some implementation solutions, the method in the present disclosure analyzes and detects the frequency interference and the pulse interference by identifying the preamble of the communication signal. Because the communication signal has not yet been found in this process, the initial amplification gain $G_1$ of the controllable gain circuit 201 is set to the maximum receiving gain corresponding to the maximum amplitude of the communication signal when the sampling circuit 202 is not saturated. This prevents an analog front end from performing saturate clipping on the received signal to a greatest extent, thus ensuring characteristics of the original signal. This makes it convenient to identify the valid preamble signal, the frequency interference signal, and the pulse interference signal in the communication signal. Furthermore, the method in the present disclosure further utilizes a detection result to perform frequency interference suppression and pulse interference suppression on a subsequent signal, and completes decoding and parsing. Such a manner in which the preamble part and the subsequent signal are separately processed is also identical as an overall preamble signal identification link in the current encoding and decoding communications, which makes it easy to implement a system of the receiver.

In some implementation solutions, the method in the present disclosure provides a detailed pulse interference identification method, and dynamically sets the pulse interference determining peak value $V_{HP}$ corresponding to the amplification gain $G_1$ and the pulse interference determining peak value $V'_{HP}$ corresponding to the amplification gain $G_2$. This dynamic setting method can adapt to changing communication channels and interference on site.

In some implementation solutions, the present disclosure considers and processes a time-domain propagation characteristic of the pulse interference, fully combines the pulse receiving and transmitting characteristic function $G_{impact}(\cdot)$ of the receiver, and dynamically sets a time-domain influence range of the pulse interference based on pulse strength.

## Claims

1. A method for suppressing pulse interference in encoding and decoding communications, **characterized by** comprising:

   step 1: amplifying, by a controllable gain circuit (201), an input communication signal by an initial amplification gain $G_1$, such that an amplified communication signal enters a sampling circuit (202); identifying, by a preamble detection circuit (203), a preamble part $x_1(i)$ in the sampling signal, and decomposing the sampling signal to obtain a valid preamble signal $T_1(i)$; and decomposing, by a frequency interference detection circuit (204), a frequency interference signal part $D_1(i)$ from $x_1(i)$-$T_1(i)$, such that the other interference signal part $N_1(i)$ is obtained, namely, $N_1(i)=x_1(i)-T_1(i)-D_1(i)$, wherein i=1, 2, ..., R, and R represents a length of a sampling point identified by a preamble;
   step 2: setting an amplification gain $G_2$ of the controllable gain circuit (201) based on the valid preamble signal $T_1(i)$ and the other interference signal part $N_1(i)$, which comprises the following two cases:

   2-1): if a ratio of energy $P_{N1}$ of the other interference signal part $N_1(i)$ to energy $P_{T1}$ of the valid preamble signal $T_1(i)$, namely, $P_{N1}/P_{T1}$, is less than a preset communication signal decoding threshold $H_1$, determining that it is not necessary to suppress pulse interference in the other interference signal part $N_1(i)$, setting the amplification gain $G_2$ of the controllable gain circuit (201) to a maximum amplification value satisfying that a current amplitude $x_1(i)$ does not exceed a sampling range after gain adjustment, and setting a pulse interference determining peak value $V_{HP}$ to 0 and a quantity of pulse interference propagation points $C_{impact}$ in time domain to 0, where the communication signal decoding threshold $H_1$ is a lower threshold that is obtained through simulation evaluation and that is of receiving and decoding performance of the communication signal for correctly receiving data under other interference excluding frequency signal interference; or
   2-2): if a ratio of energy $P_{N1}$ of the other interference signal part $N_1(i)$ to energy $P_{T1}$ of the valid preamble signal $T_1(i)$, namely, $P_{N1}/P_{T1}$, is not less than a communication signal decoding threshold $H_1$, calculating a pulse interference determining peak value $V_{HP}$ based on a signal peak value $V_{T1peak}$ of the valid preamble signal $T_1(i)$:

$$V_{HP} = H_P \cdot V_{T1peak}$$

   wherein according to a communication encoding mode, when a signal peak value of communication payload data after the preamble signal is greater than the peak value $V_{T1peak}$ of the preamble signal, $H_P$ represents a ratio of the signal peak value of the communication payload data to the peak value of the preamble signal; if the signal peak value of the communication payload data is not greater than the peak value of the preamble signal, a value of $H_P$ is 1; and further, the quantity of pulse interference propagation points $C_{impact}$ in time domain is calculated by using a pulse interference time-domain bandwidth function $G_{impact}(\cdot)$:

$$C_{impact} = G_{impact}(V_{HP} / V_{N1peak})$$

wherein $V_{N1peak}$ represents a maximum peak value of the other interference signal part $N_1(i)$, and $G_{impact}(\cdot)$ represents the pulse interference time-domain bandwidth function obtained according to characteristics of a receiving circuit of a receiver;

then each point of the other interference signal part $N_1(i)$ is compared with the pulse interference determining peak value $V_{HP}$ to obtain a pulse peak value determining sequence $P_1(i)$:

$$P_1(i) = \begin{cases} 0 & |N_1(i)| < V_{HP} \\ 1 & |N_1(i)| \geq V_{HP} \end{cases}$$

wherein an all-zero sequence $Q_1(i)=0$ is first set, wherein i=1, 2, ..., R, each $P_1(i)$ is scanned, and if $P_1(i)=1$, $Q_1(i) = Q_1(i+1) = ... = Q_1(i+C_{impact}-1) = 1$, such that a pulse interference identification sequence $Q_1(i)$ is obtained; and processing is further performed based on the following two cases:

2-2-1): if $\left(\sum\limits_{i=1}^{R} Q_1(i)\right)\Big/ R > H_{dec}$, wherein $H_{dec}$ represents that a ratio of data set to 0 in encoded data still meets an upper limit ratio of a data receiving success rate indicator, determining that the pulse interference cannot be identified in the other interference signal part $N_1(i)$, and setting the amplification gain $G_2$ of the controllable gain circuit (201) to the maximum amplification value satisfying that the current amplitude $x_1(i)$ does not exceed the sampling range after gain adjustment; or

2-2-2): if $\left(\sum\limits_{i=1}^{R} Q_1(i)\right)\Big/ R \leq H_{dec}$, that the pulse interference is identified in the other interference signal part $N_1(i)$, and setting the amplification gain $G_2$ of the controllable gain circuit (201) to a maximum amplification value satisfying that a signal with an amplitude corresponding to $\max(V_{HP}, V_{D1peak})$ does not exceed the sampling range after gain adjustment, where $V_{D1peak}$ represents a maximum peak value of the frequency interference signal part $D_1(i)$; and

step 3: amplifying the communication signal comprising payload data after the preamble signal by the amplification gain $G_2$ and sampling the communication signal to obtain sampling communication signal data $x_2(i)$, and initially setting a pulse interference delay counter (208) $N(0)$ to 0, wherein

frequency interference suppression is first performed on the sampling communication signal data $x_2(i)$ to obtain a signal $y_2(i)$ after frequency interference suppression: $y_2(i) = x_2(i) - D_2(i)$, wherein $D_2(i)$ represents a frequency interference signal, and $i$ is a positive integer;

for the case 2-1) and the case 2-2-1) described in step 2, the signal $y_2(i)$ after frequency interference suppression is input as an input signal $z_2(i)=y_2(i)$ into a subsequent decoding and demodulation circuit (210); and for the case 2-2-2) described in step 2, pulse interference suppression is adopted, where the pulse interference suppression specifically includes: comparing an absolute value $|y_2(i)|$ of the signal $y_2(i)$ after frequency interference suppression with a pulse interference determining threshold $V'_{HP}$, and setting the pulse interference delay counter (208) $N(i)$:

$$N(i) = \begin{cases} C_{impact} & |y_2(i)| \geq V'_{HP} \\ N(i-1)-1 & |y_2(i)| < V'_{HP} \ \text{and} \ N(i-1) > 0 \\ 0 & |y_2(i)| < V'_{HP} \ \text{and} \ N(i-1) = 0 \end{cases}$$

Wherein $V'_{HP}=V_{HP}\times G_1/G_2$; and the signal $z_2(i)$ after pulse interference suppression is calculated according to the following formula:

$$z_2(i) = \begin{cases} 0 & N(i) > 0 \\ y_2(i) & N(i) = 0 \end{cases};$$

and

therefore, the signal $z_2(i)$ is further decoded and demodulated subsequently to finally obtain the payload data.

2. The method for suppressing pulse interference in encoding and decoding communications according to claim 1, wherein when no communication signal is found, the initial amplification gain $G_1$ is set to a maximum receiving gain corresponding to a maximum amplitude of the communication signal when the sampling circuit (202) is not saturated.

3. The method for suppressing pulse interference in encoding and decoding communications according to claim 1 or 2, wherein a form of the pulse interference time-domain bandwidth function $G_{impact}(\cdot)$ is as follows:

$$G_{impact}(x) = \max\left(\text{ceil}\left(D_{impact} \cdot \ln\left(k_{impact}/H_L\right) - D_{impact} \cdot \ln(x)\right), 0\right)$$

wherein if an impact response characteristic of the receiver attenuates with an amplitude of a sampling point number, a normalized envelope of the impact response characteristic of the receiver is as follows:

$$H_{impact}(i) = k_{impact} \cdot e^{-\frac{i}{D_{impact}}}$$

wherein $k_{impact}$ represents an initial impact attenuation value, $D_{impact}$ represents an impact response attenuation rate of the receiver, $Hz$, represents a maximum amplitude interference threshold of correct demodulation of a payload signal, and the function ceil($x$) represents a smallest integer greater than $x$.

4. A circuit for suppressing pulse interference in encoding and decoding communications, **characterized by** comprising a controllable gain circuit (201), a sampling circuit (202), a preamble detection circuit (203), a frequency interference detection circuit (204), a pulse interference detection circuit (205), a frequency interference suppression circuit (206), a pulse interference suppression circuit (211), and a subsequent decoding and demodulation circuit (210), wherein

a signal output by the pulse interference detection circuit (205) comprises pulse interference determining threshold $V'_{HP}$, a quantity of pulse interference propagation points $C_{impact}$ in time domain, and the pulse interference identification result indication signal;
the preamble detection circuit (203), the frequency interference detection circuit (204), the pulse interference detection circuit (205), the frequency interference suppression circuit (206), the pulse interference suppression circuit (211), and the subsequent decoding and demodulation circuit (210) are in a time-sharing working state; when no received data is found, the preamble detection circuit (203), the frequency interference detection circuit (204), and the pulse interference detection circuit (205) are in a working state, and receive and process sampling data to find a valid preamble of a communication received signal; and after a valid preamble signal is identified and discovered, the preamble detection circuit (203), the frequency interference detection circuit (204), and the pulse interference detection circuit (205) stop processing the sampling data when receiving data, and the frequency interference suppression circuit (206), the pulse interference suppression circuit (211), and the subsequent decoding and demodulation circuit (210) process the sampling data, and stop working when the data is decoded and demodulated;
the controllable gain circuit (201) is configured to amplify an input communication signal by an initial amplification gain $G_1$, such that an amplified communication signal enters a sampling circuit (202);
the preamble detection circuit (203) is configured to identify a preamble part $x_1(i)$ in the sampling signal, and decompose the sampling signal to obtain a valid preamble signal $T_1(i)$;
the frequency interference detection circuit (204) is configured to decompose a frequency interference signal part $D_1(i)$ from $x_1(i)-T_1(i)$, obtain an initial frequency interference parameter, and further calculate the other interference signal part $N_1(i)$ according to the following formula: $N_1(i)=x_1(i)-T_1(i)-D_1(i)$, wherein i=1, 2, ..., $R$, and $R$ represents a length of a sampling point identified by a preamble;
the pulse interference detection circuit (205) is configured to set an amplification gain $G_2$ of the controllable

gain circuit (201) based on the valid preamble signal $T_1(i)$ and the other interference signal part $N_1(i)$, which comprises the following two cases:

2-1): if a ratio of energy $P_{N1}$ of the other interference signal part $N_1(i)$ to energy $P_{T1}$ of the valid preamble signal $T_1(i)$, namely, $P_{N1}/P_{T1}$, is less than a preset communication signal decoding threshold $H_1$, determining that it is not necessary to suppress pulse interference in the other interference signal part $N_1(i)$, setting the amplification gain $G_2$ of the controllable gain circuit (201) to a maximum amplification value satisfying that a current amplitude $x_1(i)$ does not exceed a sampling range after gain adjustment, and setting a pulse interference determining peak value $V_{HP}$ to 0 and a quantity of pulse interference propagation points $C_{impact}$ in time domain to 0, where the communication signal decoding threshold $H_1$ is a lower threshold that is obtained through simulation evaluation and that is of receiving and decoding performance of the communication signal for correctly receiving data under other interference excluding frequency signal interference; or

2-2): if a ratio of energy $P_{N1}$ of the other interference signal part $N_1(i)$ to energy $P_{T1}$ of the valid preamble signal $T_1(i)$, namely, $P_{N1}/P_{T1}$, is not less than a communication signal decoding threshold $H_1$, calculating a pulse interference determining peak value $V_{HP}$ based on a signal peak value $V_{T1peak}$ of the valid preamble signal $T_1(i)$:

$$V_{HP} = H_P \cdot V_{T1peak}$$

wherein according to a communication encoding mode, when a signal peak value of communication payload data after the preamble signal is greater than the peak value $V_{T1peak}$ of the preamble signal, $H_P$ represents a ratio of the signal peak value of the communication payload data to the peak value of the preamble signal; if the signal peak value of the communication payload data is not greater than the peak value of the preamble signal, a value of $H_P$ is 1; and further, the quantity of pulse interference propagation points $C_{impact}$ in time domain is calculated by using a pulse interference time-domain bandwidth function $G_{impact}(\cdot)$:

$$C_{impact} = G_{impact}(V_{HP} / V_{N1peak})$$

wherein $V_{N1peak}$ represents a maximum peak value of the other interference signal part $N_1(i)$, and $G_{impact}(\cdot)$ represents the pulse interference time-domain bandwidth function obtained according to characteristics of a receiving circuit of a receiver;

then each point of the other interference signal part $N_1(i)$ is compared with the pulse interference determining peak value $V_{HP}$ to obtain a pulse peak value determining sequence $P_1(i)$:

$$P_1(i) = \begin{cases} 0 & |N_1(i)| < V_{HP} \\ 1 & |N_1(i)| \geq V_{HP} \end{cases}$$

wherein an all-zero sequence $Q_1(i)=0$ is first set, wherein i=1, 2, ..., R, each $P_1(i)$ is scanned, and if $P_1(i)=1$, $Q_1(i) = Q_1(i+1) = ... = Q_1(i+C_{impact}-1) = 1$, such that a pulse interference identification sequence $Q_1(i)$ is obtained; and processing is further performed based on the following two cases:

2-2-1): if $\left(\sum_{i=1}^{R} Q_1(i)\right) / R > H_{dec}$ , wherein $H_{dec}$ represents that a ratio of data set to 0 in encoded data still meets an upper limit ratio of a data receiving success rate indicator, determining that the pulse interference cannot be identified in the other interference signal part $N_1(i)$, and setting the amplification gain $G_2$ of the controllable gain circuit (201) to the maximum amplification value satisfying that the current amplitude $x_1(i)$ does not exceed the sampling range after gain adjustment; or

2-2-2): if $\left(\sum_{i=1}^{R} Q_1(i)\right) / R \leq H_{dec}$ , that the pulse interference is identified in the other interference signal part $N_1(i)$, and setting the amplification gain $G_2$ of the controllable gain circuit (201) to a maximum amplification value satisfying that a signal with an amplitude corresponding to max($V_{HP}$, $V_{D1peak}$) does not exceed the sampling range after gain adjustment, where $V_{D1peak}$ represents a maximum peak value of the frequency interference signal part $D_1(i)$; and

the sampling circuit (202) is configured to sample the communication signal, after amplifying the communication signal comprising payload data after the preamble signal by the amplification gain $G_2$, to obtain sampling communication signal data $x_2(i)$;

the frequency interference suppression circuit (206) is configured to first perform frequency interference suppression on the sampling communication signal data $x_2(i)$ based on the initial frequency interference parameter input by the frequency interference detection circuit (204) after the valid preamble signal is identified and found, tracks and analyzes a frequency interference signal $D_2(i)$, and outputs a signal $y_2(i) = x_2(i) - D_2(i)$ after frequency interference suppression;

the frequency interference suppression circuit (206) is further configured to, for the case 2-1) and the case 2-2-1) described in step 2, input the signal $y_2(i)$ after frequency interference suppression as an input signal $z_2(i)=y_2(i)$ into a subsequent decoding and demodulation circuit (210);

the pulse interference suppression circuit (211) is configured to, for the case 2-2-2) described in step 2, perform pulse interference suppression, where the pulse interference suppression specifically includes: comparing an absolute value $|y_2(i)|$ of the signal $y_2(i)$ after frequency interference suppression with a pulse interference determining threshold $V'_{HP}$, and setting the pulse interference delay counter (208) $N(i)$:

$$N(i) = \begin{cases} C_{impact} & |y_2(i)| \geq V'_{HP} \\ N(i-1)-1 & |y_2(i)| < V'_{HP} \quad \text{and} \quad N(i-1) > 0 \\ 0 & |y_2(i)| < V'_{HP} \quad \text{and} \quad N(i-1) = 0 \end{cases}$$

wherein $V'_{HP}=V_{HP}\times G_1/G_2$; and calculating the signal $z_2(i)$ after pulse interference suppression according to the following formula:

$$z_2(i) = \begin{cases} 0 & N(i) > 0 \\ y_2(i) & N(i) = 0 \end{cases};$$

and

therefore, the signal $z_2(i)$ is further decoded and demodulated subsequently to finally obtain the payload data;

connection relationships among the controllable gain circuit (201), the sampling circuit (202), the preamble detection circuit (203), the frequency interference detection circuit (204), the pulse interference detection circuit (205), the frequency interference suppression circuit (206), the pulse interference suppression circuit (211), and the subsequent decoding and demodulation circuit (210) are as follows:

a receiving signal input pin of the controllable gain circuit (201) is configured to receive a communication signal, and an amplified communication signal output pin of the controllable gain circuit (201) is connected to a signal input pin of the sampling circuit (202);

an output of the sampling circuit (202) is divided into paths: a first sampling signal output is connected to an input pin of the preamble detection circuit (203), and a second sampling signal output pin is connected to an input pin of the frequency interference suppression circuit (206);

a signal output pin of the preamble detection circuit (203) is connected to a signal input pin of the frequency interference detection circuit (204), a signal output pin of the frequency interference detection circuit (204) is connected to signal input pin of the pulse interference detection circuit (205), and an amplification gain control signal output pin of the pulse interference detection circuit (205) is connected to an amplification gain control signal input pin of the controllable gain circuit (201);

a frequency interference-suppressed signal output pin of the frequency interference suppression circuit (206) is connected to a signal input pin of the pulse interference suppression circuit (211), and a signal output pin of the pulse interference suppression circuit (211) is connected to a signal input pin of the subsequent decoding and demodulation circuit (210); and

an output pin that is of the frequency interference detection circuit (204) and used to output an initial parameter signal of frequency interference is connected to an input pin that is of the frequency interference suppression circuit (206) and used to input the initial parameter signal of the frequency interference, and an output pin that is of the pulse interference detection circuit (205) and used to output a pulse interference identification result indication signal is connected to an input pin that is of the pulse interference suppression circuit (211) and used to input the pulse interference identification result indication signal,

wherein the pulse interference suppression circuit (211) comprises a comparison circuit (207), a pulse interference delay counter circuit (208), and a zero-setting circuit (209), wherein a frequency interference-suppressed signal input pin of the comparison circuit (207) is connected to the frequency interference-suppressed signal $y_2(i)$ output pin of the frequency interference suppression circuit (206), a comparison signal output pin of the comparison circuit (207) is connected to a number setting control signal output pin of the pulse interference delay counter circuit (208), a zero-setting control signal output pin of the pulse interference delay counter circuit (208) is connected to a zero-setting control signal input pin of the zero-setting circuit (209), the frequency interference-suppressed signal $y_2(i)$ output pin of the frequency interference suppression circuit (206) is further connected to a signal input pin of the zero-setting circuit (209), and an output pin that is of the zero-setting circuit (209) and used to output a signal $z_2(i)$ output by the pulse interference suppression circuit (211) is connected to the signal input pin of the subsequent decoding and demodulation circuit (210).

5. The circuit for suppressing pulse interference in encoding and decoding communications according to claim 4, wherein when no communication signal is found, the initial amplification gain $G_1$ is set to a maximum receiving gain corresponding to a maximum amplitude of the communication signal when the sampling circuit (202) is not saturated.

6. The circuit for suppressing pulse interference in encoding and decoding communications according to claim 4 or 5, wherein a form of the pulse interference time-domain bandwidth function $G_{impact}(\cdot)$ is as follows:

$$ G_{impact}(x) = \max\left( \text{ceil}\left( D_{impact} \cdot \ln\left( k_{impact} / H_L \right) - D_{impact} \cdot \ln(x) \right), 0 \right) $$

wherein if an impact response characteristic of the receiver attenuates with an amplitude of a sampling point number, a normalized envelope of the impact response characteristic of the receiver is as follows:

$$ H_{impact}(i) = k_{impact} \cdot e^{-\frac{i}{D_{impact}}} $$

wherein $k_{impact}$ represents an initial impact attenuation value, $D_{impact}$ represents an impact response attenuation rate of the receiver, *Hz,* represents a maximum amplitude interference threshold of correct demodulation of a payload signal, and the function ceil($x$) represents a smallest integer greater than $x$.

**Patentansprüche**

1. Ein Verfahren zum Unterdrücken von Impulsinterferenz in Codierungs- und Decodierungskommunikationen, **gekennzeichnet durch** das Umfassen von:

Schritt 1: Verstärken, durch eine steuerbare Verstärkungsschaltung (201), eines Eingangskommunikationssignals um eine anfängliche Verstärkung $G_1$ derart, dass ein verstärktes Kommunikationssignal in eine Abtastschaltung (202) eintritt; Identifizieren, durch eine Präambeldetektionsschaltung (203), eines Präambelteils $x_1(i)$ in dem Abtastsignal und Zerlegen des Abtastsignals, um ein gültiges Präambelsignal $T_1(i)$ zu erhalten; und Zerlegen, durch eine Frequenzinterferenzdetektionsschaltung (204), eines Frequenzinterferenzsignalteils $D_1(i)$ aus $x_1(i)$-$T_1(i)$ derart, dass der andere Interferenzsignalteil $N_1(i)$ erhalten wird, nämlich $N_1(i)=x_1(i)$-$T_1(i)$-$D_1(i)$, wobei i=1, 2, ..., $R$, und $R$ eine Länge eines durch eine Präambel identifizierten Abtastpunktes darstellt; Schritt 2: Einstellen einer Verstärkung $G_2$ der steuerbaren Verstärkungsschaltung (201) basierend auf dem gültigen Präambelsignal $T_1(i)$ und dem anderen Interferenzsignalteil $N_1$(i), was die folgenden zwei Fälle umfasst:

2-1): wenn ein Verhältnis der Energie $P_{N1}$ des anderen Interferenzsignalteils $N_1(i)$ zu der Energie $P_{T1}$ des gültigen Präambelsignals $T_1(i)$, nämlich $P_{N1}/P_{T1}$, kleiner ist als eine voreingestellte Kommunikationssignaldecodierungsschwelle $H_1$, Bestimmen, dass es nicht notwendig ist, eine Impulsinterferenz in dem anderen Interferenzsignalteil $N_1$(i) zu unterdrücken, Setzen der Verstärkung $G_2$ der steuerbaren Verstärkungsschal-

tung (201) auf einen maximalen Verstärkungswert, der erfüllt, dass eine aktuelle Amplitude $x_1(i)$ einen Abtastbereich nach der Verstärkungseinstellung nicht überschreitet, und Setzen eines Impulsinterferenzbestimmungsspitzenwerts $V_{HP}$ auf 0 und einer Menge von Impulsinterferenzausbreitungspunkten $C_{impact}$ im Zeitbereich auf 0, wobei die Kommunikationssignaldecodierungsschwelle $H_1$ eine untere Schwelle ist, die durch Simulationsauswertung erhalten wird und die von der Empfangs- und Decodierungs-Performance des Kommunikationssignals zum korrekten Empfangen von Daten unter einer anderen Interferenz mit Ausnahme von Frequenzsignalinterferenz ist; oder

2-2): wenn ein Verhältnis der Energie $P_{N1}$ des anderen Interferenzsignalteils $N_1(i)$ zu der Energie $P_{T1}$ des gültigen Präambelsignals $T_1(i)$, nämlich $P_{N1}/P_{T1}$, nicht kleiner als eine Kommunikationssignaldecodierungsschwelle $H_1$ ist, Berechnen eines Impulsinterferenzbestimmungsspitzenwerts $V_{HP}$ basierend auf einem Signalspitzenwert $V_{T1peak}$ des gültigen Präambelsignals $T_1(i)$:

$$V_{HP} = H_P \cdot V_{T1peak}$$

wobei gemäß einem Kommunikationscodierungsmodus, wenn ein Signalspitzenwert von Kommunikationsnutzdaten nach dem Präambelsignal größer ist als der Spitzenwert $V_{T1peak}$ des Präambelsignals, $H_P$ ein Verhältnis des Signalspitzenwerts der Kommunikationsnutzdaten zu dem Spitzenwert des Präambelsignals darstellt; wenn der Signalspitzenwert der Kommunikationsnutzdaten nicht größer als der Spitzenwert des Präambelsignals ist, ein Wert von $H_P$ 1 ist; und ferner die Menge von Impulsinterferenzausbreitungspunkten $C_{impact}$ im Zeitbereich durch Verwenden einer Impulsinterferenz-Zeitbereich-Bandbreite-Funktion $G_{impact}(\cdot)$ berechnet wird:

$$C_{impact} = G_{impact}(V_{HP} / V_{N1peak})$$

wobei $V_{N1peak}$ einen maximalen Spitzenwert des anderen Interferenzsignalteils $N_1(i)$ darstellt und $G_{impact}(\cdot)$ die Impulsinterferenz-Zeitbereich-Bandbreite-Funktion darstellt, die gemäß Charakteristika einer Empfangsschaltung eines Empfängers erhalten wird;

dann wird jeder Punkt des anderen Interferenzsignalteils $N_1(i)$ mit dem Impulsinterferenzbestimmungsspitzenwert $V_{HP}$ verglichen, um eine Impulsspitzenwertbestimmungssequenz $P_1(i)$ zu erhalten:

$$P_1(i) = \begin{cases} 0 & |N_1(i)| < V_{HP} \\ 1 & |N_1(i)| \geq V_{HP} \end{cases}$$

wobei zuerst eine Allnull-Sequenz $Q_1(i)=0$ eingestellt wird, wobei i=1, 2, ..., R, jedes $P_1(i)$ abgetastet wird, und wenn $P_1(i)=1$, $Q_1(i) = Q_1(i+1) = ... = Q_1(i+C_{impact}-1) = 1$, derart, dass eine Impulsinterferenzidentifikationssequenz $Q_1(i)$ erhalten wird; und ein Verarbeiten ferner basierend auf den folgenden zwei Fällen durchgeführt wird: R

$$\left(\sum_{i=1}^{R} Q_1(i)\right)\Big/ R > H_{dec}$$

2-2-1): wenn , wobei $H_{dec}$ darstellt, dass ein Verhältnis von auf 0 gesetzten Daten in codierten Daten immer noch ein Obergrenzenverhältnis eines Datenempfangserfolgsratenindikators erfüllt, Bestimmen, dass die Impulsinterferenz in dem anderen Interferenzsignalteil $N_1(i)$ nicht identifiziert werden kann, und Setzen der Verstärkung $G_2$ der steuerbaren Verstärkungsschaltung (201) auf den maximalen Verstärkungswert, der erfüllt, dass die aktuelle Amplitude $x_1(i)$ den Abtastbereich nach der Verstärkungseinstellung nicht überschreitet; oder

$$\left(\sum_{i=1}^{R} Q_1(i)\right)\Big/ R \leq H_{dec}$$

2-2-2): wenn , dass die Impulsinterferenz in dem anderen Interferenzsignalteil $N_1(i)$ identifiziert wird, und Setzen der Verstärkung $G_2$ der steuerbaren Verstärkungsschaltung (201) auf einen maximalen Verstärkungswert, der erfüllt, dass ein Signal mit einer Amplitude, die max($V_{HP}$, $V_{D1peak}$) entspricht, den Abtastbereich nach der Verstärkungseinstellung nicht überschreitet, wobei $V_{D1peak}$ einen maximalen Spitzenwert des Frequenzinterferenzsignalteils $D_1(i)$ darstellt; und

Schritt 3: Verstärken des Kommunikationssignals, umfassend Nutzdaten nach dem Präambelsignal, um die Verstärkung $G_2$ und Abtasten des Kommunikationssignals, um Abtastkommunikationssignaldaten $x_2(i)$ zu erhalten, und anfängliches Setzen eines Impulsinterferenzverzögerungszählers (208) N(0) auf 0, wobei

zuerst eine Frequenzinterferenzunterdrückung an den Abtastkommunikationssignaldaten $x_2(i)$ durchgeführt wird, um ein Signal $y_2(i)$ nach Frequenzinterferenzunterdrückung zu erhalten: $y_2(i) = x_2(i) - D_2(i)$, wobei $D_2(i)$ ein Frequenzinterferenzsignal darstellt und $i$ eine positive Ganzzahl ist;

für den Fall 2-1) und den Fall 2-2-1), die in Schritt 2 beschrieben sind, das Signal $y_2(i)$ nach Frequenzinterferenzunterdrückung als Eingangssignal $z_2(i)=y_2(i)$ in eine nachfolgende Decodierungs- und Demodulationsschaltung (210) eingegeben wird; und für den in Schritt 2 beschriebenen Fall 2-2-2) Impulsinterferenzunterdrückung angewendet wird, wobei die Impulsinterferenzunterdrückung insbesondere umfasst: Vergleichen eines Absolutwerts $|y_2(i)|$ des Signals $y_2(i)$ nach Frequenzinterferenzunterdrückung mit einer Impulsinterferenzbestimmungsschwelle $V'_{HP}$ und Einstellen des Impulsinterferenzverzögerungszählers (208) $N(i)$:

$$N(i) = \begin{cases} C_{impact} & |y_2(i)| \geq V'_{HP} \\ N(i-1)-1 & |y_2(i)| < V'_{HP} \text{ and } N(i-1) > 0 \\ 0 & |y_2(i)| < V'_{HP} \text{ and } N(i-1) = 0 \end{cases}$$

Wobei $V'_{HP} = V_{HP} \times G_1/G_2$; und das Signal $z_2(i)$ nach Impulsinterferenzunterdrückung gemäß folgender Formel berechnet wird:

$$z_2(i) = \begin{cases} 0 & N(i) > 0 \\ y_2(i) & N(i) = 0 \end{cases};$$

und

daher das Signal $z_2(i)$ anschließend weiter decodiert und demoduliert wird, um schließlich die Nutzdaten zu erhalten.

2. Das Verfahren zum Unterdrücken von Impulsinterferenz in Codierungs- und Decodierungskommunikationen gemäß Anspruch 1, wobei, wenn kein Kommunikationssignal gefunden wird, die anfängliche Verstärkung $G_1$ auf eine maximale Empfangsverstärkung gesetzt wird, die einer maximalen Amplitude des Kommunikationssignals entspricht, wenn die Abtastschaltung (202) nicht gesättigt ist.

3. Das Verfahren zum Unterdrücken von Impulsinterferenz in Codierungs- und Decodierungskommunikationen gemäß Anspruch 1 oder 2, wobei eine Form der Impulsinterferenz-Zeitbereich-Bandbreite-Funktion $G_{impact}(\cdot)$ wie folgt ist:

$$G_{impact}(x) = max\left(\text{ceil}\left(D_{impact} - ln\left(\frac{k_{impact}}{H_L}\right) D_{impact}\ ln(x)\right), 0\right)$$

wobei, wenn eine Auswirkungsantwortcharakteristik des Empfängers mit einer Amplitude einer Abtastpunktanzahl abgeschwächt wird, eine normalisierte Hüllkurve der Auswirkungsantwortcharakteristik des Empfängers wie folgt ist:

$$H_{impact}(i) = k_{impact} \cdot e^{-\frac{i}{D_{impact}}}$$

wobei $k_{impact}$ einen anfänglichen Auswirkungsabschwächungswert darstellt, $D_{impact}$ eine Auswirkungsantwortabschwächungsrate des Empfängers darstellt, $H_L$ eine maximale Amplitudeninterferenzschwelle einer korrekten Demodulation eines Nutzlastsignals darstellt und die Funktion ceil($x$) eine kleinste Ganzzahl größer als $x$ darstellt.

4. Eine Schaltung zum Unterdrücken von Impulsinterferenz in Codierungs- und Decodierungskommunikationen, **gekennzeichnet durch** das Umfassen einer steuerbaren Verstärkungsschaltung (201), einer Abtastschaltung (202), einer Präambeldetektionsschaltung (203), einer Frequenzinterferenzdetektionsschaltung (204), einer Impulsinterferenzdetektionsschaltung (205), einer Frequenzinterferenzunterdrückungsschaltung (206), einer Impulsinterferenzunterdrückungsschaltung (211) und einer nachfolgenden Decodierungs- und Demodulationsschaltung (210), wobei

ein von der Impulsinterferenzdetektionsschaltung (205) ausgegebenes Signal eine Impulsinterferenzbestimmungsschwelle $V'_{HP}$, eine Menge von Impulsinterferenzausbreitungspunkten $C_{impact}$ im Zeitbereich und das Impulsinterferenzidentifikationsergebnisanzeigesignal umfasst;

die Präambeldetektionsschaltung (203), die Frequenzinterferenzdetektionsschaltung (204), die Impulsinterferenzdetektionsschaltung (205), die Frequenzinterferenzunterdrückungsschaltung (206), die Impulsinterferenzunterdrückungsschaltung (211) und die nachfolgende Decodierungs- und Demodulationsschaltung (210) in einem Time-Sharing-Arbeitszustand sind; wenn keine empfangenen Daten gefunden werden, die Präambeldetektionsschaltung (203), die Frequenzinterferenzdetektionsschaltung (204) und die Impulsinterferenzdetektionsschaltung (205) in einem Arbeitszustand sind und Abtastdaten empfangen und verarbeiten, um eine gültige Präambel eines empfangenen Kommunikationssignals zu finden; und nachdem ein gültiges Präambelsignal identifiziert und entdeckt wurde, die Präambeldetektionsschaltung (203), die Frequenzinterferenzdetektionsschaltung (204) und die Impulsinterferenzdetektionsschaltung (205) die Verarbeitung der Abtastdaten beenden, wenn sie Daten empfangen, und die Frequenzinterferenzunterdrückungsschaltung (206), die Impulsinterferenzunterdrückungsschaltung (211) und die nachfolgende Decodierungs- und Demodulationsschaltung (210) die Abtastdaten verarbeiten und aufhören zu arbeiten, wenn die Daten decodiert und demoduliert sind;

die steuerbare Verstärkungsschaltung (201) ausgebildet ist, um ein Eingangskommunikationssignal um eine anfängliche Verstärkung $G_1$ zu verstärken, derart, dass ein verstärktes Kommunikationssignal in eine Abtastschaltung (202) eintritt;

die Präambeldetektionsschaltung (203) ausgebildet ist, um einen Präambelteil $x_1(i)$ in dem Abtastsignal zu identifizieren und das Abtastsignal zu zerlegen, um ein gültiges Präambelsignal $T_1(i)$ zu erhalten;

die Frequenzinterferenzdetektionsschaltung (204) ausgebildet ist, um einen Frequenzinterferenzsignalteil $D_1(i)$ aus $x_1(i)$-$T_1(i)$ zu zerlegen, einen anfänglichen Frequenzinterferenzparameter zu erhalten und ferner den anderen Interferenzsignalteil $N_1(i)$ gemäß der folgenden Formel zu berechnen: $N_1(i)=x_1(i)-T_1(i)-D_1(i)$, wobei i=1, 2, ..., R, und R eine Länge eines durch eine Präambel identifizierten Abtastpunktes darstellt;

die Impulsinterferenzdetektionsschaltung (205) ausgebildet ist, um eine Verstärkung $G_2$ der steuerbaren Verstärkungsschaltung (201) basierend auf dem gültigen Präambelsignal $T_1(i)$ und dem anderen Interferenzsignalteil $N_1(i)$ einzustellen, was die folgenden zwei Fälle umfasst:

2-1): wenn ein Verhältnis der Energie $P_{N1}$ des anderen Interferenzsignalteils $N_1(i)$ zu der Energie $P_{T1}$ des gültigen Präambelsignals $T_1(i)$, nämlich $P_{N1}/P_{T1}$, kleiner ist als eine voreingestellte Kommunikationssignaldecodierungsschwelle $H_1$, Bestimmen, dass es nicht notwendig ist, eine Impulsinterferenz in dem anderen Interferenzsignalteil 7Vi(i) zu unterdrücken, Setzen der Verstärkung $G_2$ der steuerbaren Verstärkungsschaltung (201) auf einen maximalen Verstärkungswert, der erfüllt, dass eine aktuelle Amplitude $x_1(i)$ einen Abtastbereich nach der Verstärkungseinstellung nicht überschreitet, und Setzen eines Impulsinterferenzbestimmungsspitzenwerts $V_{HP}$ auf 0 und einer Menge von Impulsinterferenzausbreitungspunkten $C_{impact}$ im Zeitbereich auf 0, wobei die Kommunikationssignaldecodierungsschwelle $H_1$ eine untere Schwelle ist, die durch Simulationsauswertung erhalten wird und die von der Empfangs- und Decodierungs-Performance des Kommunikationssignals zum korrekten Empfangen von Daten unter einer anderen Interferenz mit Ausnahme von Frequenzsignalinterferenz ist; oder

2-2): falls ein Verhältnis der Energie $P_{N1}$ des anderen Interferenzsignalteils $N_1(i)$ zu der Energie $P_{T1}$ des gültigen Präambelsignals $T_1(i)$, nämlich $P_{N1}/P_{T1}$, nicht kleiner als eine Kommunikationssignaldecodierschwelle $H_1$ ist, Berechnen eines Impulsinterferenzbestimmungsspitzenwerts $V_{HP}$ basierend auf einem Signalspitzenwert $V_{T1peak}$ des gültigen Präambelsignals $T_1(i)$:

$$V_{HP} = H_P \cdot V_{T1peak}$$

wobei gemäß einem Kommunikationscodierungsmodus, wenn ein Signalspitzenwert von Kommunikationsnutzdaten nach dem Präambelsignal größer ist als der Spitzenwert $V_{T1peak}$ des Präambelsignals, $H_P$ ein Verhältnis des Signalspitzenwerts der Kommunikationsnutzdaten zu dem Spitzenwert des Präambelsignals darstellt; wenn der Signalspitzenwert der Kommunikationsnutzdaten nicht größer als der Spitzenwert des Präambelsignals ist, ein Wert von $H_P$ 1 ist; und ferner die Menge von Impulsinterferenzausbreitungspunkten $C_{impact}$ im Zeitbereich durch Verwenden einer Impulsinterferenz-Zeitbereich-Bandbreite-Funktion $G_{impact}(\cdot)$ berechnet wird:

$$C_{impact} = G_{impact}(V_{HP} / V_{N1peak})$$

wobei $V_{N1peak}$ einen maximalen Spitzenwert des anderen Interferenzsignalteils $N_1(i)$ darstellt und $G_{impact}(\cdot)$ die Impulsinterferenz-Zeitbereich-Bandbreite-Funktion darstellt, die gemäß Charakteristika einer Empfangsschaltung eines Empfängers erhalten wird;
dann wird jeder Punkt des anderen Interferenzsignalteils $N_1(i)$ mit dem Impulsinterferenzbestimmungsspitzenwert $V_{HP}$ verglichen, um eine Impulsspitzenwertbestimmungssequenz $P_1(i)$ zu erhalten:

$$P_1(i) = \begin{cases} 0 & |N_1(i)| < V_{HP} \\ 1 & |N_1(i)| \geq V_{HP} \end{cases}$$

wobei zuerst eine Allnull-Sequenz $Q_1(i)=0$ eingestellt wird, wobei i=1, 2, ..., R, jedes $P_1(i)$ abgetastet wird, und wenn $P_1(i)=1$, $Q_1(i) = Q_1(i+1) = ... = Q_1(i+C_{impact}-1) = 1$, derart, dass eine Impulsinterferenzidentifikationssequenz $Q_1(i)$ erhalten wird; und ein Verarbeiten ferner basierend auf den folgenden zwei Fällen durchgeführt wird:

2-2-1): wenn $\left( \sum_{i=1}^{R} Q_1(i) \right) \Big/ R > H_{dec}$, wobei $H_{dec}$ darstellt, dass ein Verhältnis von auf 0 gesetzten Daten in codierten Daten immer noch ein Obergrenzenverhältnis eines Datenempfangserfolgsratenindikators erfüllt, Bestimmen, dass die Impulsinterferenz in dem anderen Interferenzsignalteil $N_1(i)$ nicht identifiziert werden kann, und Setzen der Verstärkung $G_2$ der steuerbaren Verstärkungsschaltung (201) auf den maximalen Verstärkungswert, der erfüllt, dass die aktuelle Amplitude $x_1(i)$ den Abtastbereich nach Verstärkungseinstellung nicht überschreitet; oder

2-2-2): wenn $\left( \sum_{i=1}^{R} Q_1(i) \right) \Big/ R \leq H_{dec}$, dass die Impulsinterferenz in dem anderen Interferenzsignalteil $N_1(i)$ identifiziert wird, und Setzen der Verstärkung $G_2$ der steuerbaren Verstärkungsschaltung (201) auf einen maximalen Verstärkungswert, der erfüllt, dass ein Signal mit einer Amplitude, die max($V_{HP}$, $V_{D1peak}$) entspricht, den Abtastbereich nach Verstärkungseinstellung nicht überschreitet, wobei $V_{D1peak}$ einen maximalen Spitzenwert des Frequenzinterferenzsignalteils $D_1(i)$ darstellt; und

die Abtastschaltung (202) ausgebildet ist, um das Kommunikationssignal abzutasten, nachdem sie das Kommunikationssignal, umfassend Nutzdaten nach dem Präambelsignal um die Verstärkung $G_2$ verstärkt hat, um Abtastkommunikationssignaldaten $x_2(i)$ zu erhalten;
die Frequenzinterferenzunterdrückungsschaltung (206) ausgebildet ist, um zuerst eine Frequenzinterferenzunterdrückung an den Abtastkommunikationssignaldaten $x_2(i)$ basierend auf dem anfänglichen Frequenzinterferenzparameter durchzuführen, der von der Frequenzinterferenzdetektionsschaltung (204) eingegeben wird, nachdem das gültige Präambelsignal identifiziert und gefunden wurde, ein Frequenzinterferenzsignal $D_2(i)$ verfolgt und analysiert und ein Signal $y_2(i) = x_2(i) - D_2(i)$ nach Frequenzinterferenzunterdrückung ausgibt;
die Frequenzinterferenzunterdrückungsschaltung (206) ferner ausgebildet ist, um für den Fall 2-1) und den Fall 2-2-1), die in Schritt 2 beschrieben sind, das Signal $y_2(i)$ nach Frequenzinterferenzunterdrückung als ein Eingangssignal $z_2(i)=y_2(i)$ in eine nachfolgende Decodierungs- und Demodulationsschaltung (210) einzugeben;
die Impulsinterferenzunterdrückungsschaltung (211) ausgebildet ist, um für den in Schritt 2 beschriebenen Fall 2-2-2) eine Impulsinterferenzunterdrückung durchzuführen, wobei die Impulsinterferenzunterdrückung insbesondere umfasst: Vergleichen eines Absolutwerts $|y_2(i)|$ des Signals $y_2(i)$ nach Frequenzinterferenzunterdrückung mit einer Impulsinterferenzbestimmungsschwelle $V'_{HP}$ und Einstellen des Impulsinterferenzverzögerungszählers (208) $N(i)$:

$$N(i) = \begin{cases} C_{impact} & |y_2(i)| \geq V'_{HP} \\ N(i-1)-1 & |y_2(i)| < V'_{HP} \ \text{and} \ N(i-1) > 0 \\ 0 & |y_2(i)| < V'_{HP} \ \text{and} \ N(i-1) = 0 \end{cases}$$

wobei $V'_{HP} = V_{HP} \times G_1/G_2$; und Berechnen des Signals $z_2(i)$ nach Impulsinterferenzunterdrückung gemäß folgender Formel:

$$z_2(i) = \begin{cases} 0 & N(i) > 0 \\ y_2(i) & N(i) = 0 \end{cases};$$

und

daher das Signal $z_2(i)$ anschließend weiter decodiert und demoduliert wird, um schließlich die Nutzdaten zu erhalten;

Verbindungsverhältnisse zwischen der steuerbaren Verstärkungsschaltung (201), der Abtastschaltung (202), der Präambeldetektionsschaltung (203), der Frequenzinterferenzdetektionsschaltung (204), der Impulsinterferenzdetektionsschaltung (205), der Frequenzinterferenzunterdrückungsschaltung (206), der Impulsinterferenzunterdrückungsschaltung (211) und der nachfolgenden Decodierungs- und Demodulationsschaltung (210) wie folgt sind:

ein Empfangssignaleingangspin der steuerbaren Verstärkungsschaltung (201) ist ausgebildet, um ein Kommunikationssignal zu empfangen, und ein verstärkter Kommunikationssignalausgangspin der steuerbaren Verstärkungsschaltung (201) ist mit einem Signaleingangspin der Abtastschaltung (202) verbunden;

ein Ausgang der Abtastschaltung (202) ist in Pfade aufgeteilt: ein erster Abtastsignalausgang ist mit einem Eingangspin der Präambeldetektionsschaltung (203) verbunden und ein zweiter Abtastsignalausgangspin ist mit einem Eingangspin der Frequenzinterferenzunterdrückungsschaltung (206) verbunden;

ein Signalausgangspin der Präambeldetektionsschaltung (203) ist mit einem Signaleingangspin der Frequenzinterferenzdetektionsschaltung (204) verbunden, ein Signalausgangspin der Frequenzinterferenzdetektionsschaltung (204) ist mit einem Signaleingangspin der Impulsinterferenzdetektionsschaltung (205) verbunden und ein Verstärkungssteuersignalausgangspin der Impulsinterferenzdetektionsschaltung (205) ist mit einem Verstärkungssteuersignaleingangspin der steuerbaren Verstärkungsschaltung (201) verbunden;

ein frequenzinterferenzunterdrückter Signalausgangspin der Frequenzinterferenzunterdrückungsschaltung (206) ist mit einem Signaleingangspin der Impulsinterferenzunterdrückungsschaltung (211) verbunden und ein Signalausgangspin der Impulsinterferenzunterdrückungsschaltung (211) ist mit einem Signaleingangspin der nachfolgenden Decodierungs- und Demodulationsschaltung (210) verbunden; und

ein Ausgangspin, der von der Frequenzinterferenzdetektionsschaltung (204) ist und verwendet wird, um ein anfängliches Parametersignal der Frequenzinterferenz auszugeben, ist mit einem Eingangspin verbunden, der von der Frequenzinterferenzunterdrückungsschaltung (206) ist und verwendet wird, um das anfängliche Parametersignal der Frequenzinterferenz einzugeben, und ein Ausgangspin, der von der Impulsinterferenzdetektionsschaltung (205) ist und verwendet wird, um ein Impulsinterferenzidentifikationsergebnisanzeigesignal auszugeben, ist mit einem Eingangspin verbunden, der von der Impulsinterferenzunterdrückungsschaltung (211) ist und verwendet wird, um das Impulsinterferenzidentifikationsergebnisanzeigesignal einzugeben,

wobei die Impulsinterferenzunterdrückungsschaltung (211) eine Vergleichsschaltung (207), eine Impulsinterferenzverzögerungszählerschaltung (208) und eine Nullsetzschaltung (209) umfasst, wobei ein frequenzinterferenzunterdrückter Signaleingangspin der Vergleichsschaltung (207) mit dem Frequenzinterferenzunterdrücktes-Signal-$y_2(i)$-Ausgangspin der Frequenzinterferenzunterdrückungsschaltung (206) verbunden ist, ein Vergleichssignalausgangspin der Vergleichsschaltung (207) mit einem Anzahleinstellungssteuersignalausgangspin der Impulsinterferenzverzögerungszählerschaltung (208) verbunden ist, ein Nullsetzsteuersignalausgangspin der Impulsinterferenzverzögerungszählerschaltung (208) mit einem Nullsetzsteuersignaleingangspin der Nullsetzschaltung (209) verbunden ist, der Frequenzinterferenzunterdrücktes-Signal-$y_2(i)$-Ausgangspin der Frequenzinterferenzunterdrückungsschaltung (206) ferner mit einem Signaleingangspin der Nullsetzschaltung (209) verbunden ist, und ein Ausgangspin, der von der Nullsetzschaltung (209) ist und verwendet wird, um ein von der Impulsinterferenzunterdrückungsschaltung (211) ausgegebenes Signal $z_2(i)$ auszugeben, mit dem Signaleingangspin der nachfolgenden Decodierungs- und Demodulationsschaltung (210) verbunden ist.

5. Die Schaltung zum Unterdrücken von Impulsinterferenz in Codierungs- und Decodierungskommunikationen gemäß Anspruch 4, wobei, wenn kein Kommunikationssignal gefunden wird, die anfängliche Verstärkung $G_1$ auf eine maximale Empfangsverstärkung gesetzt wird, die einer maximalen Amplitude des Kommunikationssignals entspricht, wenn die Abtastschaltung (202) nicht gesättigt ist.

6. Die Schaltung zum Unterdrücken von Impulsinterferenz in Codierungs- und Decodierungskommunikationen gemäß Anspruch 4 oder 5, wobei eine Form der Impulsinterferenz-Zeitbereich-Bandbreite-Funktion $G_{impact}(\cdot)$ wie folgt ist:

$$G_{impact}(x) = max\left(\text{ceil}\left(D_{impact} \cdot ln\left(\frac{k_{impact}}{H_L}\right) - D_{impact} \cdot ln(x)\right), 0\right)$$

wobei, wenn eine Auswirkungsantwortcharakteristik des Empfängers mit einer Amplitude einer Abtastpunktanzahl abgeschwächt wird, eine normalisierte Hüllkurve der Auswirkungsantwortcharakteristik des Empfängers wie folgt ist:

$$H_{impact}(i) = k_{impact} \cdot e^{-\frac{i}{D_{impact}}}$$

wobei $k_{impact}$ einen anfänglichen Auswirkungsabschwächungswert darstellt, $D_{impact}$ eine Auswirkungsantwortabschwächungsrate des Empfängers darstellt, $H_L$ eine maximale Amplitudeninterferenzschwelle einer korrekten Demodulation eines Nutzlastsignals darstellt und die Funktion ceil($x$) eine kleinste Ganzzahl größer als $x$ darstellt.

**Revendications**

1. Procédé pour supprimer une interférence d'impulsion dans des communications de codage et de décodage, **caractérisée par** le fait de comprendre :

étape 1 : amplifier, par un circuit de gain commandable (201), un signal de communication d'entrée d'un gain d'amplification initial $G_1$, de sorte qu'un signal de communication amplifié entre dans un circuit d'échantillonnage (202) ; identifier, par un circuit de détection de préambule (203), une partie de préambule $x_1(i)$ dans le signal d'échantillonnage, et décomposer le signal d'échantillonnage pour obtenir un signal de préambule $T_1(i)$ valide ; et décomposer, par un circuit de détection d'interférence de fréquence (204), une partie de signal d'interférence de fréquence $D_1(i)$ à partir de $x_1(i)$-$T_1(i)$, de sorte que l'autre partie de signal d'interférence $N_1(i)$ soit obtenue, à savoir $N_1(i)=x_1(i)$-$T_1(i)$-$D_1(i)$, dans laquelle i=1, 2, .., $R$, et $R$ représente une longueur d'un point d'échantillonnage identifié par un préambule ;
étape 2 : régler un gain d'amplification $G_2$ du circuit de gain commandable (201) sur la base du signal de préambule $T_1(i)$ valide et de l'autre partie de signal d'interférence $N_1$(i), ce qui comprend les deux cas suivants :

2-1) : si un rapport entre l'énergie $P_{N1}$ de l'autre partie de signal d'interférence $N_1$(i) et l'énergie $P_{T1}$ du signal de préambule $T_1(i)$ valide, à savoir $P_{N1}/P_{T1}$, est inférieur à un seuil de décodage de signal de communication $H_1$ prédéfini, déterminer qu'il n'est pas nécessaire de supprimer une interférence d'impulsion dans l'autre partie de signal d'interférence $N_1$(i), régler le gain d'amplification $G_2$ du circuit de gain commandable (201) à une valeur d'amplification maximale satisfaisant qu'une amplitude actuelle $x_1(i)$ ne dépasse pas une plage d'échantillonnage après l'ajustement du gain, et mettre une valeur de crête de détermination d'interférence d'impulsion $V_{HP}$ à 0 et une quantité de points de propagation d'interférence d'impulsion $C_{impact}$ dans le domaine temporel à 0, le seuil de décodage de signal de communication $H_1$ étant un seuil inférieur qui est obtenu par une évaluation de simulation et qui est d'une performance de réception et de décodage du signal de communication pour recevoir correctement des données sous une autre interférence à l'exclusion de l'interférence de signal de fréquence ; ou
2-2) : si un rapport entre l'énergie $P_{N1}$ de l'autre partie de signal d'interférence $N_1(i)$ et l'énergie $P_{T1}$ du signal de préambule $T_1(i)$ valide, à savoir $P_{N1}/P_{T1}$, n'est pas inférieur à un seuil de décodage de signal de communication $H_1$, calculer une valeur de crête de détermination d'interférence d'impulsion $V_{HP}$ sur la base d'une valeur de crête de signal $V_{T1peak}$ du signal de préambule $T_1(i)$ valide :

$$V_{HP} = H_P \cdot V_{T1peak}$$

dans laquelle, selon un mode de codage de communication, lorsqu'une valeur de crête de signal de données de charge utile de communication après le signal de préambule est supérieure à la valeur de crête $V_{T1peak}$ du signal de préambule, $H_P$ représente un rapport entre la valeur de crête de signal des données de charge utile de communication et la valeur de crête du signal de préambule ; si la valeur de crête de signal des données de charge utile de communication n'est pas supérieure à la valeur de crête du signal de préambule, une valeur de $H_P$ est de 1 ; et en outre, la quantité de points de propagation d'interférence d'impulsion $C_{impact}$ dans le domaine temporel est calculée en utilisant une fonction interférence d'impulsion-domaine temporel-bande passante $G_{impact}(\cdot)$:

$$C_{impact} = G_{impact}(V_{HP} / V_{N1peak})$$

dans laquelle $V_{N1peak}$ représente une valeur de crête maximale de l'autre partie de signal d'interférence $N_1(i)$, et $G_{impact}(\cdot)$ représente la fonction interférence d'impulsion-domaine temporel-bande passante obtenue selon des caractéristiques d'un circuit de réception d'un récepteur ;

alors chaque point de l'autre partie de signal d'interférence $N_1(i)$ est comparé à la valeur de crête de détermination d'interférence d'impulsion $V_{HP}$ pour obtenir une séquence de détermination de valeur de crête d'impulsion $P_1(i)$ :

$$P_1(i) = \begin{cases} 0 & |N_1(i)| < V_{HP} \\ 1 & |N_1(i)| \geq V_{HP} \end{cases}$$

dans laquelle une séquence entièrement nulle $Q_1(i)=0$ est d'abord réglée, dans laquelle i=1, 2, ..., $R$, chaque $P_1(i)$ est balayé, et si $P_1(i)=1$, $Q_1(i) = Q_1(i+1) = ... = Q_1(i+C_{impact}-1) = 1$, de sorte qu'une séquence d'identification d'interférence d'impulsion $Q_1(i)$ soit obtenue ; et le traitement est en outre effectué sur la base des deux cas suivants :

2-2-1) : si $\left(\sum_{i=1}^{R} Q_1(i)\right)\Big/R > H_{dec}$ , dans lequel $H_{dec}$ représente qu'un rapport de données mises à 0 dans des données codées satisfait encore un rapport de limite supérieure d'un indicateur de taux de réussite de réception de données, déterminer que l'interférence d'impulsion ne peut pas être identifiée dans l'autre partie de signal d'interférence $N_1(i)$, et régler le gain d'amplification $G_2$ du circuit de gain commandable (201) à la valeur d'amplification maximale satisfaisant que l'amplitude actuelle $x_1(i)$ ne dépasse pas la plage d'échantillonnage après l'ajustement du gain ; ou

2-2-2) : si $\left(\sum_{i=1}^{R} Q_1(i)\right)\Big/R \leq H_{dec}$ , que l'interférence d'impulsion est identifiée dans l'autre partie de signal d'interférence $N_1$(i), et régler le gain d'amplification $G_2$ du circuit de gain commandable (201) à une valeur d'amplification maximale satisfaisant qu'un signal ayant une amplitude correspondant à $max(V_{HP}, V_{D1peak})$ ne dépasse pas la plage d'échantillonnage après l'ajustement du gain, dans laquelle $V_{D1peak}$ représente une valeur de crête maximale de la partie de signal d'interférence de fréquence $D_1(i)$ ; et

étape 3 : amplifier le signal de communication comprenant des données de charge utile après le signal de préambule du gain d'amplification $G_2$ et échantillonner le signal de communication pour obtenir des données de signal de communication d'échantillonnage $x_2(i)$, et mettre initialement un compteur de retard d'interférence d'impulsion (208) $N(0)$ à 0, dans laquelle

la suppression d'interférence de fréquence est d'abord effectuée sur les données de signal de communication d'échantillonnage $x_2(i)$ pour obtenir un signal $y_2(i)$ après une suppression d'interférence de fréquence : $y_2(i) = x_2(i) - D_2(i)$, dans lequel $D_2(i)$ représente un signal d'interférence de fréquence, et $i$ est un entier positif ;

pour le cas 2-1) et le cas 2-2-1) décrits à l'étape 2, le signal $y_2(i)$ après une suppression d'interférence de fréquence est entré dans un circuit de décodage et de démodulation ultérieur (210) en tant que signal d'entrée $z_2(i)=y_2(i)$ ; et pour le cas 2-2-2) décrit à l'étape 2, une suppression d'interférence d'impulsion est adoptée, où la suppression d'interférence d'impulsion comprend spécifiquement le fait de: comparer une valeur absolue $|y_2(i)|$ du signal $y_2(i)$ après la suppression d'interférence de fréquence avec un seuil de détermination d'interférence d'impulsion $V'_{HP}$, et régler le compteur de retard d'interférence d'impulsion (208) $N(i)$ :

$$N(i) = \begin{cases} C_{impact} & |y_2(i)| \geq V'_{HP} \\ N(i-1)-1 & |y_2(i)| < V'_{HP} \ \text{ and } \ N(i-1) > 0 \\ 0 & |y_2(i)| < V'_{HP} \ \text{ and } \ N(i-1) = 0 \end{cases}$$

dans lequel $V'_{HP}=V_{HP}\times G_1/G_2$ ; et le signal $z_2(i)$ après une suppression d'interférence d'impulsion est calculé selon la formule suivante :

$$z_2(i) = \begin{cases} 0 & N(i) > 0 \\ y_2(i) & N(i) = 0 \end{cases} ;$$

et

par conséquent, le signal $z_2(i)$ est en outre décodé et démodulé ultérieurement pour finalement obtenir les données de charge utile.

2. Procédé pour supprimer une interférence d'impulsion dans des communications de codage et de décodage selon la revendication 1, dans lequel, lorsqu'aucun signal de communication n'est trouvé, le gain d'amplification initial $G_1$ est réglé à un gain de réception maximal correspondant à une amplitude maximale du signal de communication lorsque le circuit d'échantillonnage (202) n'est pas saturé.

3. Procédé pour supprimer une interférence d'impulsion dans des communications de codage et de décodage selon la revendication 1 ou 2, dans lequel une forme de la fonction interférence d'impulsion-domaine temporel-bande passante $G_{impact}(\cdot)$ est la suivante :

$$G_{impact}(x) = max\left(\text{ceil}\left(D_{impact} - ln\left(\frac{k_{impact}}{H_L}\right) D_{impact} \ ln(x)\right), 0\right)$$

dans lequel, si une caractéristique de réponse à l'impact du récepteur s'atténue avec une amplitude d'un nombre de points d'échantillonnage, une enveloppe normalisée de la caractéristique de réponse à l'impact du récepteur est la suivante :

$$H_{impact}(i) = k_{impact} \cdot e^{-\frac{i}{D_{impact}}}$$

dans lequel $k_{impact}$ représente une valeur initiale d'atténuation d'impact, $D_{impact}$ représente un taux d'atténuation de réponse à l'impact du récepteur, $H_L$ représente un seuil d'interférence d'amplitude maximale de démodulation correcte d'un signal de charge utile, et la fonction ceil(x) représente un plus petit entier supérieur à $x$.

4. Circuit pour supprimer une interférence d'impulsion dans des communications de codage et de décodage, **caractérisé par** le fait de comprendre un circuit de gain commandable (201), un circuit d'échantillonnage (202), un circuit de détection de préambule (203), un circuit de détection d'interférence de fréquence (204), un circuit de détection d'interférence d'impulsion (205), un circuit de suppression d'interférence de fréquence (206), un circuit de suppression d'interférence d'impulsion (211) et un circuit de décodage et de démodulation ultérieur (210), dans lequel

un signal émis par le circuit de détection d'interférence d'impulsion (205) comprend un seuil de détermination d'interférence d'impulsion $V'_{HP}$, une quantité de points de propagation d'interférence d'impulsion $C_{impact}$ dans le domaine temporel, et le signal d'indication de résultat d'identification d'interférence d'impulsion ;

le circuit de détection de préambule (203), le circuit de détection d'interférence de fréquence (204), le circuit de détection d'interférence d'impulsion (205), le circuit de suppression d'interférence de fréquence (206), le circuit de suppression d'interférence d'impulsion (211) et le circuit de décodage et de démodulation ultérieur (210) sont dans un état de fonctionnement à temps partagé ; lorsque aucunes données reçues ne sont trouvées, le circuit de détection de préambule (203), le circuit de détection d'interférence de fréquence (204) et le circuit de détection d'interférence d'impulsion (205) sont dans un état de fonctionnement et reçoivent et traitent des données d'échantillonnage pour trouver un préambule valide d'un signal de communication reçu ; et après l'identification et la découverte d'un signal de préambule valide, le circuit de détection de préambule (203), le circuit de détection d'interférence de fréquence (204) et le circuit de détection d'interférence d'impulsion (205) cessent de traiter les données d'échantillonnage lorsqu'ils reçoivent des données, et le circuit de suppression d'interférence de fréquence (206), le circuit de suppression d'interférence d'impulsion (211) et le circuit de décodage et de démodulation ultérieur (210) traitent les données d'échantillonnage et cessent de fonctionner lorsque les données sont décodées et démodulées ;

le circuit de gain commandable (201) est configuré pour amplifier un signal de communication d'entrée d'un gain d'amplification initial $G_1$, de sorte qu'un signal de communication amplifié entre dans un circuit d'échantillonnage (202) ;

le circuit de détection de préambule (203) est configuré pour identifier une partie de préambule $x_1(i)$ dans le signal d'échantillonnage et pour décomposer le signal d'échantillonnage pour obtenir un signal de préambule $T_1(i)$ valide ;

le circuit de détection d'interférence de fréquence (204) est configuré pour décomposer une partie de signal d'interférence de fréquence $D_1(i)$ à partir de $x_1(i)-T_1(i)$, obtenir un paramètre d'interférence de fréquence initial et calculer en outre l'autre partie de signal d'interférence $N_1(i)$ selon la formule suivante : $N_1(i)=x_1(i)-T_1(i)-D_1(i)$, dans laquelle i=1, 2, ..., R, et R représente une longueur d'un point d'échantillonnage identifié par un préambule ;

le circuit de détection d'interférence d'impulsion (205) est configuré pour régler un gain d'amplification $G_2$ du circuit de gain commandable (201) sur la base du signal de préambule $T_1(i)$ valide et de l'autre partie de signal d'interférence $N_1(i)$, ce qui comprend les deux cas suivants :

2-1) : si un rapport entre l'énergie $P_{N1}$ de l'autre partie de signal d'interférence $N_1(i)$ et l'énergie $P_{T1}$ du signal de préambule $T_1(i)$ valide, à savoir $P_{N1}/P_{T1}$, est inférieur à un seuil de décodage de signal de communication $H_1$ prédéfini, déterminer qu'il n'est pas nécessaire de supprimer une interférence d'impulsion dans l'autre partie de signal d'interférence $N_1(i)$, régler le gain d'amplification $G_2$ du circuit de gain commandable (201) à une valeur d'amplification maximale satisfaisant qu'une amplitude actuelle $x_1(i)$ ne dépasse pas une plage d'échantillonnage après l'ajustement du gain, et mettre une valeur de crête de détermination d'interférence d'impulsion $V_{HP}$ à 0 et une quantité de points de propagation d'interférence d'impulsion $C_{impact}$ dans le domaine temporel à 0, le seuil de décodage de signal de communication $H_1$ étant un seuil inférieur qui est obtenu par une évaluation de simulation et qui est d'une performance de réception et de décodage du signal de communication pour recevoir correctement des données sous une autre interférence à l'exclusion de l'interférence de signal de fréquence ; ou

2-2) : si un rapport entre l'énergie $P_{N1}$ de l'autre partie de signal d'interférence $N_1(i)$ et l'énergie $P_{T1}$ du signal de préambule $T_1(i)$ valide, à savoir $P_{N1}/P_{T1}$, n'est pas inférieur à un seuil de décodage de signal de communication $H_1$, calculer une valeur de crête de détermination d'interférence d'impulsion $V_{HP}$ sur la base d'une valeur de crête de signal $V_{T1peak}$ du signal de préambule $T_1(i)$ valide :

$$V_{HP} = H_P \cdot V_{T1peak}$$

dans laquelle, selon un mode de codage de communication, lorsqu'une valeur de crête de signal de données de charge utile de communication après le signal de préambule est supérieure à la valeur de crête $V_{T1peak}$ du signal de préambule, $H_P$ représente un rapport entre la valeur de crête de signal des données de charge utile de communication et la valeur de crête du signal de préambule ; si la valeur de crête de signal des données de charge utile de communication n'est pas supérieure à la valeur de crête du signal de préambule, une valeur de $H_P$ est de 1 ; et en outre, la quantité de points de propagation d'interférence d'impulsion $C_{impact}$ dans le domaine temporel est calculée en utilisant une fonction interférence d'impulsion-domaine temporel-bande passante $G_{impact}(\cdot)$ :

$$C_{impact} = G_{impact}\left(V_{HP} / V_{N1peak}\right)$$

dans laquelle $V_{N1peak}$ représente une valeur de crête maximale de l'autre partie de signal d'interférence $N_1(i)$, et $G_{impact}(\cdot)$ représente la fonction interférence d'impulsion-domaine temporel-bande passante obtenue selon des caractéristiques d'un circuit de réception d'un récepteur ;

alors chaque point de l'autre partie de signal d'interférence $N_1(i)$ est comparé à la valeur de crête de détermination d'interférence d'impulsion $V_{HP}$ pour obtenir une séquence de détermination de valeur de crête d'impulsion $P_1(i)$ :

$$P_1(i) = \begin{cases} 0 & |N_1(i)| < V_{HP} \\ 1 & |N_1(i)| \geq V_{HP} \end{cases}$$

dans laquelle une séquence entièrement nulle $Q_1(i)=0$ est d'abord réglée, dans laquelle i=1, 2, ..., $R$, chaque $P_1(i)$ est balayé, et si $P_1(i)=1$, $Q_1(i) = Q_1(i+1) = ... = Q_1(i+C_{impact}-1) = 1$, de sorte qu'une séquence d'identification d'interférence d'impulsion $Q_1(i)$ soit obtenue ; et le traitement est en outre effectué sur la base des deux cas suivants :

2-2-1) : si $\left(\sum_{i=1}^{R} Q_1(i)\right)\Big/ R > H_{dec}$ , dans lequel $H_{dec}$ représente qu'un rapport de données mises à 0 dans des données codées satisfait encore un rapport de limite supérieure d'un indicateur de taux de réussite de réception de données, déterminer que l'interférence d'impulsion ne peut pas être identifiée dans l'autre partie de signal d'interférence $N_1(i)$, et régler le gain d'amplification $G_2$ du circuit de gain commandable (201) à la valeur d'amplification maximale satisfaisant que l'amplitude actuelle $x_1(i)$ ne dépasse pas la plage d'échantillonnage après l'ajustement du gain ; ou

2-2-2) : si $\left(\sum_{i=1}^{R} Q_1(i)\right)\Big/ R \leq H_{dec}$ , que l'interférence d'impulsion est identifiée dans l'autre partie de signal d'interférence $N_1$(i), et régler le gain d'amplification $G_2$ du circuit de gain commandable (201) à une valeur d'amplification maximale satisfaisant qu'un signal ayant une amplitude correspondant à max($V_{HP}$, $V_{D1peak}$) ne dépasse pas la plage d'échantillonnage après l'ajustement du gain, dans laquelle $V_{D1peak}$ représente une valeur de crête maximale de la partie de signal d'interférence de fréquence $D_1(i)$ ; et

le circuit d'échantillonnage (202) est configuré pour échantillonner le signal de communication après avoir amplifié le signal de communication comprenant des données de charge utile après le signal de préambule du gain d'amplification $G_2$ afin d'obtenir des données de signal de communication d'échantillonnage $x_2(i)$ ;

le circuit de suppression d'interférence de fréquence (206) est configuré pour effectuer d'abord une suppression d'interférence de fréquence sur les données de signal de communication d'échantillonnage $x_2(i)$ sur la base du paramètre d'interférence de fréquence initial entré par le circuit de détection d'interférence de fréquence (204) après que le signal de préambule valide a été identifié et trouvé, suit et analyse un signal d'interférence de fréquence $D_2(i)$ et émet un signal $y_2(i) = x_2(i) - D_2(i)$ après une suppression d'interférence de fréquence ;

le circuit de suppression d'interférence de fréquence (206) est en outre configuré pour, dans le cas 2-1) et le cas 2-2-1) décrits à l'étape 2, entrer le signal $y_2(i)$ après une suppression d'interférence de fréquence en tant que signal d'entrée $z_2(i)=y_2(i)$ dans un circuit de décodage et de démodulation ultérieur (210) ;

le circuit de suppression d'interférence d'impulsion (211) est configuré pour, dans le cas 2-2-2) décrit à l'étape 2, effectuer une suppression d'interférence d'impulsion, la suppression d'interférence d'impulsion comprenant spécifiquement le fait de : comparer une valeur absolue $|y_2(i)|$ du signal $y_2(i)$ après une suppression d'interférence de fréquence avec un seuil de détermination d'interférence d'impulsion $V'_{HP}$, et régler le compteur de retard d'interférence d'impulsion (208) $N(i)$ :

$$N(i) = \begin{cases} C_{impact} & |y_2(i)| \geq V'_{HP} \\ N(i-1)-1 & |y_2(i)| < V'_{HP} \text{ and } N(i-1) > 0 \\ 0 & |y_2(i)| < V'_{HP} \text{ and } N(i-1) = 0 \end{cases}$$

dans lequel $V'_{HP} = V_{HP} \times G_1/G_2$ ; et calculer le signal $z_2(i)$ après une suppression d'interférence d'impulsion selon la formule suivante :

$$z_2(i) = \begin{cases} 0 & N(i) > 0 \\ y_2(i) & N(i) = 0 \end{cases};$$

et

par conséquent, le signal $z_2(i)$ est en outre décodé et démodulé ultérieurement pour finalement obtenir les données de charge utile ;

des relations de connexion entre le circuit de gain commandable (201), le circuit d'échantillonnage (202), le circuit de détection de préambule (203), le circuit de détection d'interférence de fréquence (204), le circuit de détection d'interférence d'impulsion (205), le circuit de suppression d'interférence de fréquence (206), le circuit de suppression d'interférence d'impulsion (211) et le circuit de décodage et de démodulation ultérieur (210) étant les suivantes :

une broche d'entrée de signal de réception du circuit de gain commandable (201) est configurée pour recevoir un signal de communication, et une broche de sortie de signal de communication amplifié du circuit de gain commandable (201) est connectée à une broche d'entrée de signal du circuit d'échantillonnage (202) ;

une sortie du circuit d'échantillonnage (202) est divisée en trajets : une première sortie de signal d'échantillonnage est connectée à une broche d'entrée du circuit de détection de préambule (203), et une deuxième broche de sortie de signal d'échantillonnage est connectée à une broche d'entrée du circuit de suppression d'interférence de fréquence (206) ;

une broche de sortie de signal du circuit de détection de préambule (203) est connectée à une broche d'entrée de signal du circuit de détection d'interférence de fréquence (204), une broche de sortie de signal du circuit de détection d'interférence de fréquence (204) est connectée à une broche d'entrée de signal du circuit de détection d'interférence d'impulsion (205), et une broche de sortie de signal de commande de gain d'amplification du circuit de détection d'interférence d'impulsion (205) est connectée à une broche d'entrée de signal de commande de gain d'amplification du circuit de gain commandable (201) ;

une broche de sortie de signal à interférence de fréquence supprimée du circuit de suppression d'interférence de fréquence (206) est connectée à une broche d'entrée de signal du circuit de suppression d'interférence d'impulsion (211), et une broche de sortie de signal du circuit de suppression d'interférence d'impulsion (211) est connectée à une broche d'entrée de signal du circuit de décodage et de démodulation ultérieur (210) ; et

une broche de sortie qui est du circuit de détection d'interférence de fréquence (204) et qui est utilisée pour émettre un signal de paramètre initial d'interférence de fréquence est connectée à une broche d'entrée qui est du circuit de suppression d'interférence de fréquence (206) et qui est utilisée pour entrer le signal de paramètre initial de l'interférence de fréquence, et une broche de sortie qui est du circuit de détection d'interférence d'impulsion (205) et qui est utilisée pour émettre un signal d'indication de résultat d'identification d'interférence d'impulsion est connectée à une broche d'entrée qui est du circuit de suppression d'interférence d'impulsion (211) et qui est utilisée pour entrer le signal d'indication de résultat d'identification d'interférence d'impulsion,

dans lequel le circuit de suppression d'interférence d'impulsion (211) comprend un circuit de comparaison (207), un circuit de compteur de retard d'interférence d'impulsion (208) et un circuit de mise à zéro (209), dans lequel une broche d'entrée de signal à interférence de fréquence supprimée du circuit de comparaison (207) est connectée à la broche de sortie de signal $y_2(i)$ à interférence de fréquence supprimée du circuit de suppression d'interférence de fréquence (206), une broche de sortie de signal de comparaison du circuit de comparaison (207) est connectée à une broche de sortie de signal de commande de réglage de nombre du circuit de compteur de retard d'interférence d'impulsion (208), une broche de sortie de signal de commande de mise à zéro du circuit de compteur de retard d'interférence d'impulsion (208) est connectée à une broche d'entrée de signal de commande de mise à zéro du circuit de mise à zéro (209), la broche de sortie de signal $y_2(i)$ à interférence de fréquence supprimée du circuit de suppression d'interférence de fréquence (206) est en outre connectée à une broche d'entrée de signal du circuit de mise à zéro (209), et une broche de sortie qui est du circuit de mise à zéro (209) et qui est utilisée pour émettre un signal $z_2(i)$ émis par le circuit de suppression d'interférence d'impulsion (211) est connectée à la broche d'entrée de signal du circuit de décodage et de démodulation ultérieur (210).

5. Circuit pour supprimer une interférence d'impulsion dans des communications de codage et de décodage selon la revendication 4, dans lequel, lorsqu'aucun signal de communication n'est trouvé, le gain d'amplification initial $G_1$ est réglé à un gain de réception maximal correspondant à une amplitude maximale du signal de communication lorsque le circuit d'échantillonnage (202) n'est pas saturé.

6. Circuit pour supprimer une interférence d'impulsion dans des communications de codage et de décodage selon la revendication 4 ou 5, dans lequel une forme de la fonction interférence d'impulsion-domaine temporel-bande passante $G_{impact}(\cdot)$ est la suivante :

$$G_{impact}(x) = max\left(\text{ceil}\left(D_{impact} \cdot ln\left(\frac{k_{impact}}{H_L}\right) - D_{impact} \cdot ln(x)\right), 0\right)$$

dans lequel, si une caractéristique de réponse à l'impact du récepteur s'atténue avec une amplitude d'un nombre de points d'échantillonnage, une enveloppe normalisée de la caractéristique de réponse à l'impact du récepteur est la suivante :

$$H_{impact}(i) = k_{impact} \cdot e^{-\frac{i}{D_{impact}}}$$

dans lequel $k_{impact}$ représente une valeur d'atténuation d'impact initiale, $D_{impact}$ représente un taux d'atténuation de réponse à l'impact du récepteur, $H_L$ représente un seuil d'interférence d'amplitude maximale de démodulation correcte d'un signal de charge utile, et la fonction ceil(x) représente un plus petit entier supérieur à $x$.

FIG. 1

EP 4 096 178 B1

**FIG. 2**

**FIG. 3**

**FIG. 4**

**FIG. 5**

**FIG. 6**

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410566690

- EP 1180851 A3

**Non-patent literature cited in the description**

- Joint Suppression of Pulse Noise in Time and Frequency Domain for OFDM System. *Microcomputer Information,* February 2009

- A New Approach to Peak Threshold Estimation for Impulsive Noise Reduction Over Power Line Fading Channels. **A. BAMIDELE et al.** IEEE SYSTEMS JOURNAL. IEEE, 01 June 2019, vol. 13, 1682-1693